(19) **Europäisches Patentamt**
**European Patent Office**
**Office européen des brevets**

(11) **EP 4 631 749 A1**

(12) **EUROPEAN PATENT APPLICATION**

(43) Date of publication:
**15.10.2025 Bulletin 2025/42**

(21) Application number: **25168657.2**

(22) Date of filing: **04.04.2025**

(51) International Patent Classification (IPC):
**B60D 1/01** (2006.01)     **B60D 1/62** (2006.01)
**B62D 15/02** (2006.01)     **B62D 53/08** (2006.01)

(52) Cooperative Patent Classification (CPC):
**B60D 1/015; B60D 1/62; B62D 15/023;** B62D 53/08

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **09.04.2024 US 202418630535**

(71) Applicant: **Outrider Technologies, Inc.**
**Brighton, CO 80603 (US)**

(72) Inventor: **Rinker, Dylan**
**Brighton, 80603 (US)**

(74) Representative: **Appleyard Lees IP LLP**
**15 Clare Road**
**Halifax HX1 2HY (GB)**

(54) **SYSTEMS AND METHODS FOR DEPLOYING A TRAILER ANGLE ENCODER**

(57)     There is provided a trailer angle encoder (2602) for determining an angle between a tractor and a trailer coupled thereto, comprising: a mounting bracket (2902) for coupling with an underside of a fifth-wheel (222) of the tractor (104); a bottom plate (2909), for mounting an optical encoder (2910), that is movable relative to the mounting bracket; and a deployment mechanism (2900) for moving the bottom plate (2909) to engage a magnet (2912), mounted to a rotatable shaft of the optical encoder (2910), with a bottom surface of a kingpin (308), the deployment mechanism (2900) comprising an actuator arm (2916) attached by a pivot (2918) to the mounting bracket (2902), wherein the actuator arm (2916) is positioned for actuation by a locking mechanism (2706) of the fifth-wheel.

EP 4 631 749 A1

## Description

This patent application relates to a trailer angle encoder and a related method.

BACKGROUND

Trucks are an essential part of modern commerce. These trucks transport materials and finished goods across the continent within their large interior spaces. Such goods are loaded and unloaded at various facilities that can include manufacturers, ports, distributors, retailers, and end users. The start and end locations are referred to as "yards" and include areas that trailers are parked (and/or staged) and moved to and from for access by tractors (trucks) for loading to a dock door for loading/unloading cargo into the associated facility, leaving the yard for travel to its destination, or entering the yard from its destination. Autonomous yard vehicles technology includes tractors (trucks) that are capable of automatically (without human intervention, or with human intervention via teleoperation) coupling, decoupling, and maneuvering trailers that are within the yard.

Safety is of upmost importance in such automated yards. The automatic maneuvering of said trailers results in situations where, if a person or other obstacle is in the intended path of the trailer or tractor, because there is no human operating the tractor, there are situations where the tractor may not know of a human or obstacle. Thus, additional sensors are desired so that the controller of the automated tractor can maneuver the trailers safely.

Additional difficulties arise because various manufactures and freight companies have their own trailers. Thus, while an automated yard vehicle may have associated sensors, it is difficult to utilize sensors on the trailers themselves because it requires human (or machine) intervention on the trailer prior to maneuvering the trailer. This additional intervention step is timely and creates an additional location for safety concern.

SUMMARY

Trucks are an essential part of modern commerce. These trucks transport materials and finished goods across the continent within their large interior spaces. Such goods are loaded and unloaded at various facilities that can include manufacturers, ports, distributors, retailers, and end users. Large over-the road (OTR) trucks typically consist of a tractor or cab unit and a separate detachable trailer that is interconnected removably to the cab via a hitching system that consists of a so-called fifth wheel and a kingpin.

Further challenges in trucking relate to docking, loading and unloading of goods to and from trailers. Warehouses and good distribution facilities have yards with multiple loading docks, and the trailer is positioned at one of the loading docks for loading and unloading. In an automated yard, the OTR truck stops at a designated location in staging area of the yard, and the OTR tractor detaches, leaving the trailer at the designated location. An autonomous tractor moves the trailer to a first one of the loading docks for unloading and/or loading. Another, or the same, autonomous tractor moves the trailer away from the loading dock when loading and/or unloading is complete and parks the trailer in a designated location of the staging area. The trailer may also be moved between loading docks if needed by another, or the same, autonomous tractor. Another, or the same, OTR tractor couples with the trailer and the OTR truck departs the yard for another destination.

One aspect of the present embodiments includes the realization that for an autonomous tractor to reverse an articulated trailer accurately and safely into a designated location, such as a loading dock, the autonomous tractor requires accurate knowledge of a position and/or location and/or orientation of the back end of the articulated trailer always. However, the articulated trailer does not have sensors for determining this information. The present embodiments solve this problem by determining an angle between the articulated trailer and the autonomous tractor, and then extrapolating a location of the back end of the articulated trailer based on a location of the autonomous tractor, an orientation of the autonomous tractor, a length of the articulated trailer and the angle between the articulated trailer and the autonomous tractor.

In certain embodiments, a trailer angle encoder for determining an angle between a tractor and a trailer coupled thereto includes an arm coupled at a pivot with a flange located beneath a fifth-wheel of the tractor and an optical encoder positioned at a first end of the arm and having a rotatable shaft with a mechanical coupler. The arm being positioned to mechanically couple the mechanical coupler with a kingpin of the trailer.

In certain embodiments, a method for determining an angle between a tractor and a trailer that are coupled together includes: controlling, from a controller of the tractor, the tractor to pull the trailer a short distance; determining, from an optical encoder mounted on the tractor and mechanically coupled with the trailer, a change in angle between the tractor and the trailer; and calculating the angle between the tractor and the trailer based on the change in angle.

In certain embodiments, a trailer angle encoder for determining an angle between a tractor and a trailer coupled thereto includes a spring plate for coupling at a first end with an underside of a fifth-wheel of the tractor, an optical encoder attached to the spring plate, a magnet mounted to a rotatable shaft of the optical encoder, and a clearance and cleaning block positioned on the spring plate to interact with a bottom surface of a kingpin of the trailer during hitching of the tractor to the trailer; wherein the magnet magnetically couples with the bottom surface of the kingpin when the tractor is hitched to the trailer.

In certain embodiments, a software product includes instructions, stored on non-transitory computer-readable media, wherein the instructions, when executed by a processor, perform steps for determining an angle between a tractor and a trailer that are coupled together, the software product including instructions for controlling, from a controller of the tractor, the tractor to pull the trailer a short distance; instructions for determining, from an optical encoder mounted on the tractor and mechanically coupled with the trailer, a change in angle between the tractor and the trailer; and instructions for calculating the angle between the tractor and the trailer based on the change in angle.

In certain embodiments, a method for determining an angle between a tractor and a trailer that are coupled together includes: capturing, within a controller of the tractor, a point cloud using a rear facing LIDAR positioned on the tractor; converting points of the point cloud corresponding to front corners of the trailer to coordinate form; and calculating the angle between the tractor and the trailer based upon the coordinates of the front corners of the trailer.

In certain embodiments, a software product includes instructions, stored on non-transitory computer-readable media, wherein the instructions, when executed by a processor, perform steps for determining an angle between a tractor and a trailer that are coupled together, the software product including instructions for capturing, within a controller of the tractor, a point cloud using a rear facing LIDAR positioned on the tractor; instructions for converting points of the point cloud corresponding to front corners of the trailer to coordinate form; and instructions for calculating the angle between the tractor and the trailer based upon the coordinates of the front corners of the trailer.

In certain embodiments, the techniques described herein relate to a trailer angle encoder for determining an angle between a tractor and a trailer coupled thereto, including: a mounting bracket for coupling with an underside of a fifth-wheel of the tractor; a bottom plate, for mounting an optical encoder, that is movable relative to the mounting bracket; and a deployment mechanism for moving the bottom plate to engage a magnet, mounted to a rotatable shaft of the optical encoder, with a bottom surface of a kingpin.

In certain embodiments, the techniques described herein relate to a method for deploying a trailer angle encoder in a fifth-wheel, including: transferring a force from a locking mechanism of the fifth-wheel to a deployment mechanism of the trailer angle encoder; using the force to move a bottom plate of the trailer angle encoder towards jaws of the fifth-wheel; and magnetically coupling a magnet of the trailer angle encoder with a bottom surface of a kingpin positioned in the fifth-wheel.

BRIEF DESCRIPTION OF THE FIGURES

FIG. 1 is an aerial view showing one example autonomous yard that uses an autonomous tractor to move trailers between a staging area and loading docks of a warehouse, in embodiments.

FIG. 2 is a block diagram illustrating key functional components of the autonomous tractor of FIG. 1, in embodiments.

FIG. 3 is a side elevation showing the tractor of FIG. 1 reversing under a lower surface of a trailer, in embodiments.

FIG. 4 shows one example hitch and unhitch sequence of states implemented by the function state machine of FIG. 2 for coupling and uncoupling the tractor and the trailer, in embodiments.

FIG. 5 shows the trailer angle module of FIG. 2 in further example detail, in embodiments.

FIG. 6 is a schematic plan view illustrating the tractor of FIGs. 1-3 backing the trailer up to one of a plurality of adjacent loading docks of the warehouse of FIG. 1, in embodiments.

FIG. 7 is a schematic showing example assumptions made by the motion planner running in the maneuvering module of the tractor to determine the steering angle for controlling the tractor to reverse the trailer, in embodiments.

FIG. 8 is a schematic diagram showing one example trailer angle encoder positioned beneath the FW of the tractor of FIGs. 1-3 and in a disengaged position as the tractor couples with the trailer, in embodiments.

FIG. 9 is a schematic showing the trailer angle encoder of FIG. 8 in an engaged position to mechanically couple with the kingpin of the trailer while the tractor and trailer are coupled together, in embodiments.

FIGs. 10-12 are schematic diagrams showing another example trailer angle encoder positioned beneath the FW of the tractor of FIGs. 1-3, in embodiments.

FIG. 13 shows the LIDAR of FIG. 2 mounted on a cab portion of the tractor to face the trailer, in embodiments.

FIG. 14 is a schematic illustrating example operation of the LIDAR of FIG. 13 to detect front corners of the trailer when the trailer is in-line with the tractor, in embodiments.

FIG. 15 is a schematic illustrating example operation of the LIDAR of FIG. 13 to detect the front corners of the trailer when the trailer is at a twenty-degree angle to the tractor, in embodiments.

FIG. 16 is a front perspective view of the tractor coupled with the trailer of FIG. 1, showing a LIDAR mounted to an extensible mast, in embodiments.

FIG 17 is a schematic diagram showing one example magnetically coupled trailer angle encoder positioned beneath the FW of the tractor prior to the tractor coupling (hitching) with the trailer, in embodiments.

FIG. 18 is a schematic showing the magnetically coupled trailer angle encoder of FIG. 17 magnetically coupled with the kingpin of the trailer hitched to the tractor, in embodiments.

FIGs. 19, 20 and 21 shows side, top and front elevations, respectively, of the spring plate of FIGs. 17 and 18, in embodiments.

FIG. 22 is a top view of the magnetically coupled trailer angle encoder of FIGs. 17 and 18, in embodiments.

FIGs. 23, 24, and 25 are front, side, and top elevations, respectively, of the two-axis positioning table of FIGs. 17 and 18, in embodiments.

FIG. 26 is a bottom perspective view of the FW of FIG. 2 fitted with a trailer angle encoder actuated by a yoke of the FW, in embodiments.

FIG. 27 is a bottom perspective view of the FW of FIG. 2 prior to fitting of trailer angle encoder of FIG. 26.

FIG. 28 is an alternative bottom perspective view of the FW of FIG. 2 fitted with the trailer angle encoder of FIG. 26, in embodiments.

FIG. 29 is a schematic diagram illustrating the trailer angle encoder of FIGs. 26 and 28 in further example detail, in embodiments.

FIG. 30 is a perspective view of a portion of the trailer angle encoder of FIGs. 26, 28, and 29, illustrating the two-axis positioning table and the bottom plate in further example detail, in embodiments.

FIG. 31 is a schematic diagram of a cut-away portion of the trailer angle encoder of FIGs. 26, 28, and 29 to show further detail of the two vertical shafts, the actuation arm, and the pivot, in embodiments.

FIG. 32 is a perspective diagram illustrating the yoke locking jaws and causing the actuation arms to lift the bottom plate, the optical encoder, and the magnet, in embodiments.

FIG. 33 is a flowchart illustrating one example method for the deploying trailer angle encoder of FIGs. 26, and 28-32 during operation of the FW of FIG. 2, in embodiments.

## DETAILED DESCRIPTION OF THE EMBODIMENTS

In an automated yard, an autonomous tractor moves trailers between staging areas and loading docks for unloading and/or loading. The autonomous tractor repeatedly couples (hitches) to a trailer, moves the trailer, and then decouples (unhitches) from the trailer.

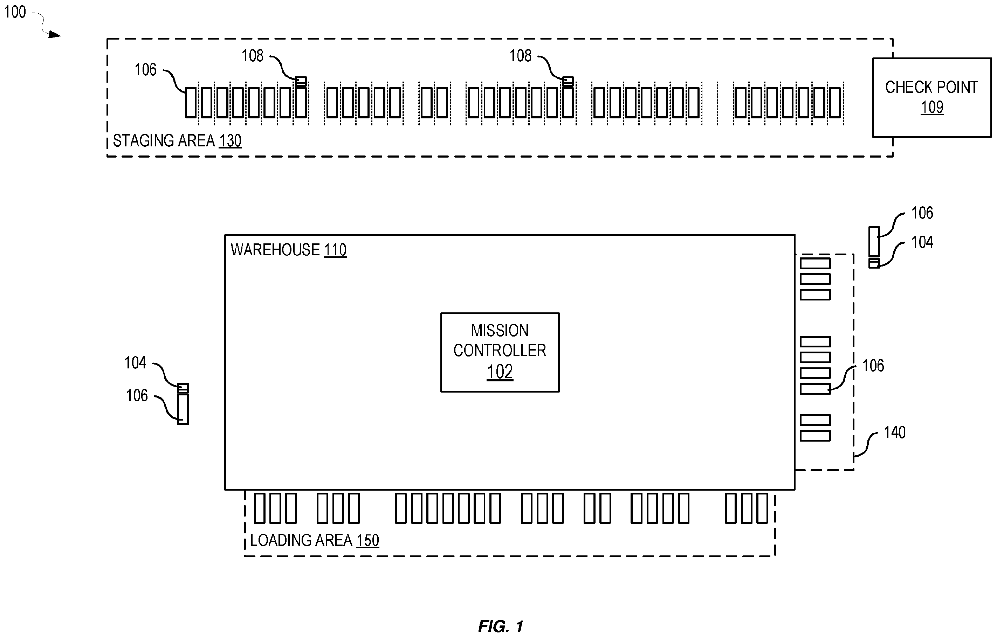

FIG. 1 is an aerial view showing one example autonomous yard 100 (e.g., a goods handling facility, shipping facility, etc.) that uses an autonomous tractor 104 to move trailers 106 between a staging area 130 and loading docks of a warehouse 110. For example, an over-the-road (OTR) tractors 108 deliver goods-laden trailers 106 from remote locations and retrieve trailers 106 for return to such locations (or elsewhere-such as a storage depot). In a standard operational procedure, OTR tractor 108 arrives with trailer 106 and checks-in at a facility entrance checkpoint 109. A guard/attendant enters information (e.g., trailer number or QR (ID) code scan-embedded information already in the system, which would typically include: trailer make/model/year/service connection location, etc.) into a mission controller 102 (e.g., a computer software server that may be located offsite, in the cloud, fully onsite, or partially located within a facility building complex, shown as a warehouse 110). Warehouse 110 includes perimeter loading docks (located on one or more sides of the building), associated (typically elevated) cargo portals and doors, and floor storage, all arranged in a manner familiar to those of skill in shipping, logistics, and the like.

By way of a simplified operational example, after arrival of OTR tractor 108 and trailer 106, the guard/attendant at checkpoint 109 directs the driver to deliver trailer 106 to a specific numbered parking space in a designated staging area 130, which may include a large array of side-by-side trailer parking locations, arranged as appropriate for the facility's overall layout.

Once the driver has parked the trailer in the designated parking space of the staging area 130, he/she disconnects the service lines and ensures that connectors are in an accessible position (i.e. if adjustable/sealable), and decouples OTR tractor 108 from trailer 106. If trailer 106 is equipped with swing doors, this can also provide an opportunity for the driver to unlatch and clip trailer doors in the open position, if directed by yard personnel to do so.

At some later time, (e.g., when warehouse is ready to process the loaded trailer) mission controller 102 directs (e.g., commands or otherwise controls) tractor 104 to automatically couple (e.g., hitch) with trailer 106 at a pick-up spot in staging area 130 and move trailer 106 to a drop-off spot at an assigned unloading dock in unloading area 140 for example. Accordingly, tractor 104 couples with trailer 106 at the pick-up spot, moves trailer 106 to unloading area 140, and then backs trailer 106 into the assigned loading dock at the drop-off spot such that the rear of trailer 106 is positioned in close proximity with the portal and cargo doors of warehouse 110. The pick-up spot and the drop-off spot may be any designated trailer parking location in staging are 130, any loading dock in unloading area 140, and any loading dock within loading area 150.

Manual and/or automated techniques are used to offload the cargo from trailer 106 and into warehouse 110. During unloading, tractor 104 may remain hitched to trailer 106 or may decouple (e.g., unhitch) to perform other tasks. After unloading, mission controller 102 directs tractor 104 to move trailer 106 from a pick-up spot in unloading area 140 and to a drop-off spot, either returning trailer 106 to staging area 130 or delivering trailer 106 to an assigned loading dock in a loading area 150 of warehouse 110, where trailer 106 is then loaded. Once loaded, mission controller 102 directs tractor 104 to move trailer 106 from a pick-up spot in loading area 150 to a drop-off spot in staging area 130 where it may await collection by another (or the same) OTR tractor 108. Given the pick-up spot and the drop-off spot, tractor 104 may autonomously move trailer 106.

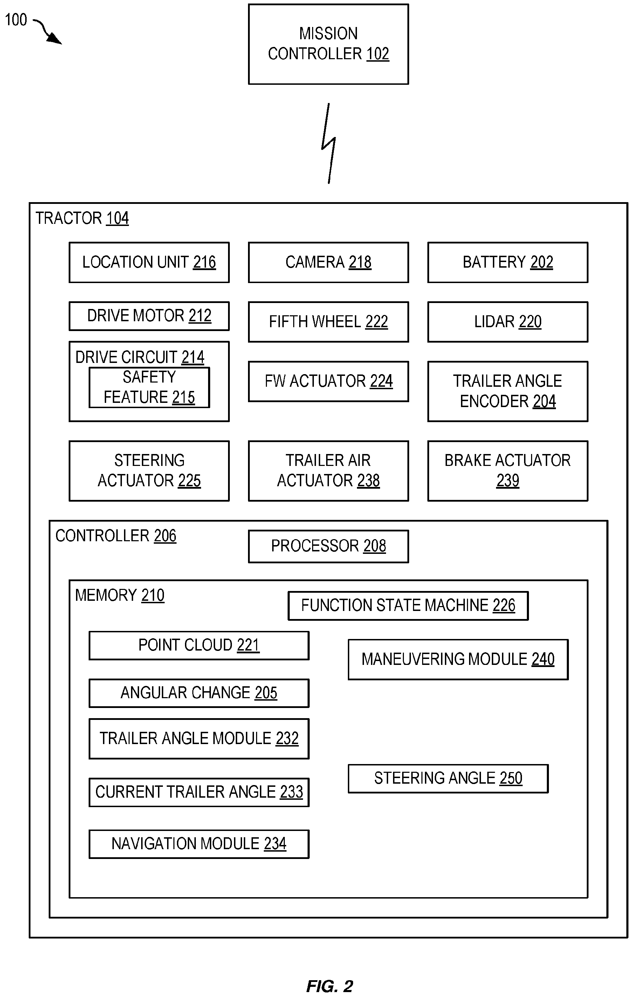

FIG. 2 is a block diagram illustrating key functional components of tractor 104. Tractor 104 includes a battery 202 for powering components of tractor 104 and a controller 206 with at least one digital processor 208 communicatively coupled with memory 210 that may include one or both of volatile memory (e.g., RAM, SRAM, etc.) and non-volatile memory (e.g., PROM, FLASH, Magnetic, Optical, etc.). Memory 210 stores a plurality of software modules including machine-readable instructions that, when executed by the at least one processor 208, cause the at least one processor 208 to implement functionality of tractor 104 as described herein to operate autonomously within autonomous yard 100 under direction from mission controller 102.

When tractor 104 is an electric tractor, tractor 104 also includes at least one drive motor 212 controlled by a drive circuit 214 to mechanically drive a plurality of wheels (not shown) to maneuver tractor 104. Drive circuit 214 includes a safety feature 215 that deactivates motion of tractor 104 when it detects that rotation of drive motor 212 is impeded (e.g., stalled) and that drive motor 212 is drawing a current at or greater than a stalled threshold (e.g., above one of 400A, 500A, 600A, 700A, etc. depending on the configuration of the drive motor 212), for a predetermined period (e.g., five seconds). Safety feature 215 may thereby prevent damage to tractor 104 and/or other objects around tractor 104 when tractor 104 is impeded by an object. Safety feature 215 is described above with respect to an electric tractor. It should be appreciated that a similar safety feature could be included for diesel-based tractors, such as reducing engine power when an RPM threshold goes above a pre-set threshold. When safety feature 215 is tripped, tractor 104 requires manual reactivation before being able to resume movement. Accordingly, tripping safety feature 215 is undesirable.

Tractor 104 also includes a location unit 216 (e.g., a GPS receiver) that determines an absolute location and orientation of tractor 104, a plurality of cameras 218 for capturing images of objects around tractor 104, and at least one Light Detection and Ranging (LIDAR) device 220 (hereinafter LIDAR 220) for determining a point cloud about tractor 104. Location unit 216, the plurality of cameras 218, and the at least one LIDAR 220 cooperate with controller 206 to enable autonomous maneuverability and safety of tractor 104. Tractor 104 includes a fifth wheel (FW) 222 for coupling with trailer 106 and a FW actuator 224 controlled by controller 206 to position FW 222 at a desired height. In certain embodiments, FW actuator 224 includes an electric motor coupled with a hydraulic pump that drives a hydraulic piston that moves FW 222. However, FW actuator 224 may include other devices for positioning FW 222 without departing from the scope hereof. Tractor 104 may also include an air actuator 238 that controls air supplied to trailer 106 and a brake actuator 239 that controls brakes of tractor 104 and trailer 106 when connected thereto via air actuator 238.

Controller 206 also includes a trailer angle module 232 that determines a trailer angle 233 between tractor 104 and trailer 106 based on one or both of a trailer angle measured by an optical encoder 204 positioned near FW 222 and mechanically coupled with trailer 106 and a point cloud 221 captured by the at least one LIDAR 220.

Controller 206 may implement a function state machine 226 that controls operation of tractor 104 based upon commands (requests) received from mission controller 102. For example, mission controller 102 may receive a request (e.g., via an API, and/or via a GUI used by a dispatch operator) to move trailer 106 from a first location (e.g., slot X in staging area 130) to a second location (e.g., loading dock Y in unloading area 140). Once this request is validated, mission controller 102 invokes a mission planner (e.g., a software package, not shown) that computes a 'mission plan' for each tractor 104. For example, the mission plan is an ordered sequence of high level primitives to be followed by tractor 104, in order to move trailer 106 from location X to location Y. The mission plan may include primitives such as drive along a first route, couple with trailer 106 in parking location X, drive along a second route, back trailer 106 into a loading dock, and decouple from trailer 106.

Function state machine 226 includes a plurality of states, each associated with at least one software routine (e.g., machine-readable instructions) that is executed by processor 208 to implements a particular function of tractor 104. Function state machine 226 may transitions through one or more states when following the primitives from mission controller 102 to complete the mission plan.

Controller 206 may also include an articulated maneuvering module 240, implemented as machine-readable instructions that, when executed by processor 208, cause processor 208 to controls drive circuit 214 and steering actuator 225 to maneuver tractor 104 based on directives from mission controller 102.

Controller 206 may also include a navigation module 234 that uses location unit 216 to determine a current location and orientation of tractor 104. Navigation module 234 may also use other sensors (e.g., camera 218 and/or LIDAR 220) to determine the current location and orientation of tractor 104 using dead-reckoning techniques.

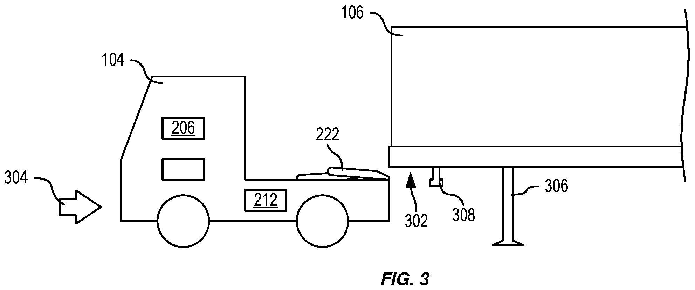

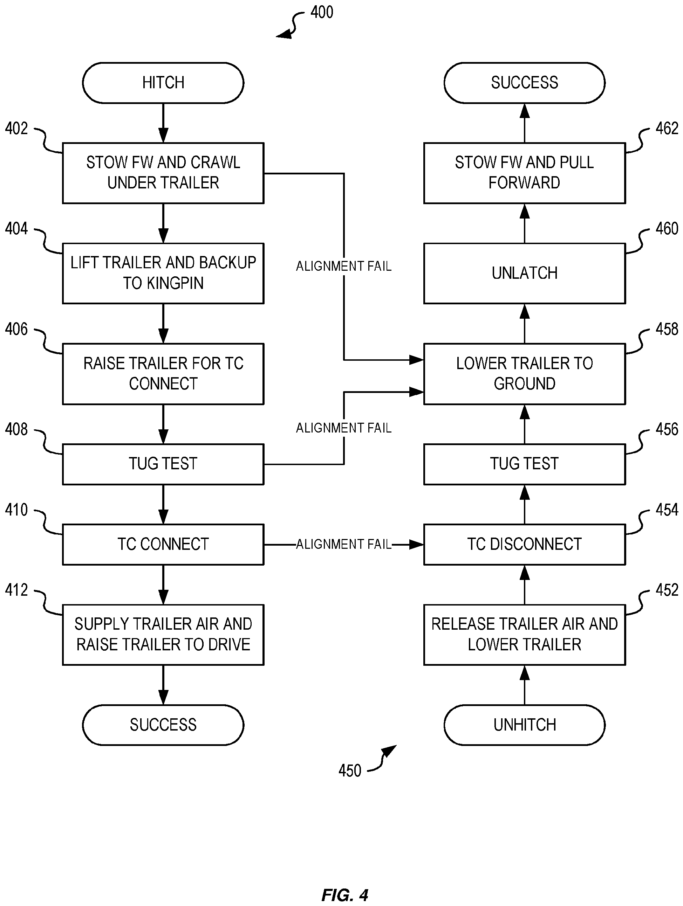

FIG. 3 is a side elevation showing tractor 104 of FIG. 1 reversing under a lower surface 302 of trailer 106. FIG. 4 shows one example hitch sequence 400 of states implemented by function state machine 226 of tractor 104, FIGs. 1-3, for coupling tractor 104 with trailer 106, and one example unhitch sequence 450 of states implemented by function state machine 226 for decoupling tractor 104 from trailer 106. FIG. 4 also shows example transitions between sequences when alignment fail is detected (e.g., when an activity of the current state fails for some reason), which allows function state machine 226 to recover from the failure (e.g., undo certain actions) and to reattempt the command. FIGs. 3 and 4 are best viewed together with the following description.

As shown in FIG. 3, landing gear 306 of trailer 106 is sufficiently extended such that a lower surface 302 (e.g., a FW plate) of a front end of trailer 106 is high enough above ground level to allow FW 222, when fully retracted, to be pushed thereunder without stalling drive motor 212 of tractor 104. That is, drive motor 212 provides sufficient force to push FW 222 under lower surface 302. However, landing gear 306 is extended by a driver of OTR tractor 108 when leaving trailer 106 in staging area 130 of autonomous yard 100, and therefore the height of lower surface 302 is at the discretion of the driver and may not be consistent between trailers 106. Further, the force required to move FW 222 under lower surface 302 is also dependent upon a weight (e.g., of goods) at the front end of trailer 106. When drive motor 212 is unable to provide sufficient force to push FW 222 beneath lower surface 302, such as when landing gear 306 is not sufficiently extended, drive motor 212 stalls.

In response to receiving a hitch command from mission controller 102, once tractor 104 is aligned with trailer 106, controller 206, in state 402, stows FW 222 and controls drive circuit 214 to move tractor 104 slowly backwards as indicated by arrow 304. When controller 206 detects that FW 222 is beneath lower surface 302 of trailer 106, drive motor 212 is stopped and function state machine 226 transitions to state 404. If controller 206 determines that tractor 104 is not correctly aligned with trailer 106, function state machine 226 transitions to state 458 of unhitch sequence 450 such that another attempt may be made. In state 404, controller 206 controls FW actuator 224 to lift trailer 106 and controls drive circuit 214 to back tractor 104, and thus FW 222, up to a kingpin 308 of trailer 106. In state 406, controller 206 controls FW actuator 224 to raise FW 222 and thereby lift the front end of trailer 106 for Trailer Connect (e.g., a process of connecting air lines/electrical from tractor 104 to trailer 106 using gladhand ID and orientation). In state 408, controller 206 controls drive circuit 214 to perform a tug test. If controller 206 determines that tractor 104 is not correctly coupled with trailer 106 (e.g., the kingpin did not latch), function state machine 226 transitions to state 458 of unhitch sequence 450 such that another attempt may be made. In state 410, controller 206 controls trailer air actuator 238 to perform the TC connect. If controller 206 determines that the TC did not connect successfully, function state machine 226 transitions to state 454 of unhitch sequence 450 such that another attempt may be made. In state 412, controller 206 controls trailer air actuator 238 to supply trailer air and controls FW actuator 224 to raise FW 222 higher to ensure that the trailer landing gear clears the ground in preparation to drive.

In response to receiving an unhitch command

from mission controller 102, once trailer 106 is correctly positioned, controller 206, in state 452, controls trailer air actuator 238 to release trailer air and controls FW actuator 224 to lower FW 222 and the front end of trailer 106. In state 454, controller 206 controls trailer air actuator 238 to disconnect the TC from trailer 106. In state 456, controller 206 controls drive circuit 214 to move tractor 104 forward to perform a tug test. In state 458, controller 206 controls FW actuator 224 to lower the front end of trailer 106 to the ground. In state 460, controller 206 controls FW actuator 224 to unlatch from the trailer kingpin. In state 462, controller 206 controls FW actuator 224 to stow FW 222 and controls drive circuit 214 to cause tractor 104 to move forward away from trailer 106.

## Trailer Angle Measurement

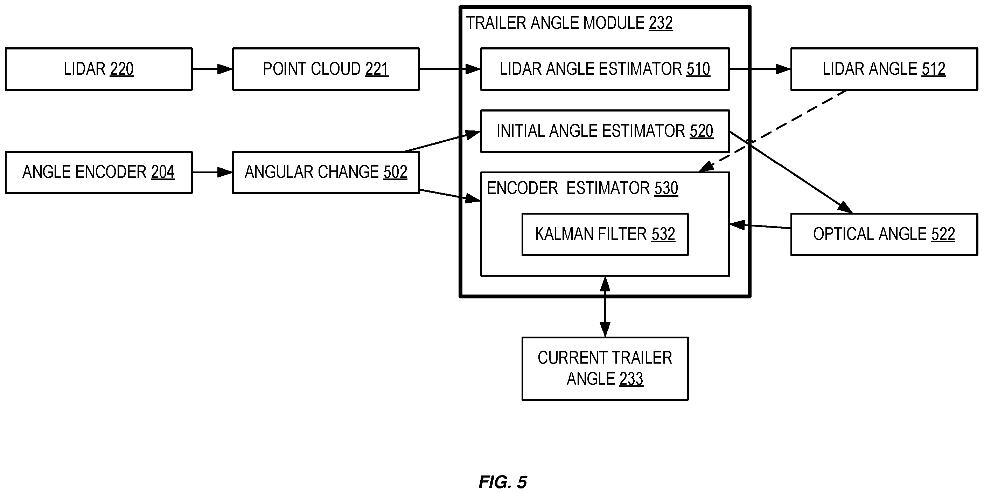

FIG. 5 shows trailer angle module 232 of controller 206, FIG. 2, in further example detail. Trailer angle module 232 includes a LIDAR angle estimator 510 for determining a LIDAR angle 512 that estimates an angle of trailer 106 relative to tractor 104 based upon point cloud 221 captured by LIDAR 220 and including points corresponding to a front end of trailer 106. Trailer angle module 232 also includes an initial angle estimator 520 that includes algorithms for determining an optical trailer angle 522 based on angular change 502 output by trailer angle encoder 204 over a short movement of tractor 104 and trailer 106 (e.g., shortly after coupling/hitching of trailer 106 to tractor 104). Trailer angle module 232 also includes an encoder estimator 530 that updates current trailer angle 233 based on angular change 502. Encoder estimator 530 may include a Kalman filter 532 that processes LIDAR angle 512 and angular change 502 to generate current trailer angle 233. For example, Kalman filter 532 reduces noise on LIDAR angle 512. Kalman filter 532 estimates the unknown initial bias in optical trailer angle 522 (e.g., in incremental encoder data from angle encoder 204) based upon LIDAR angle 512 determined from LIDAR 220 (described below). The estimated bias is refined and removed from angular change 502 resulting in a low noise optical trailer angle 522. Further biases due to crooked tandems and/or trailers may be removed using short move calculations, described below.

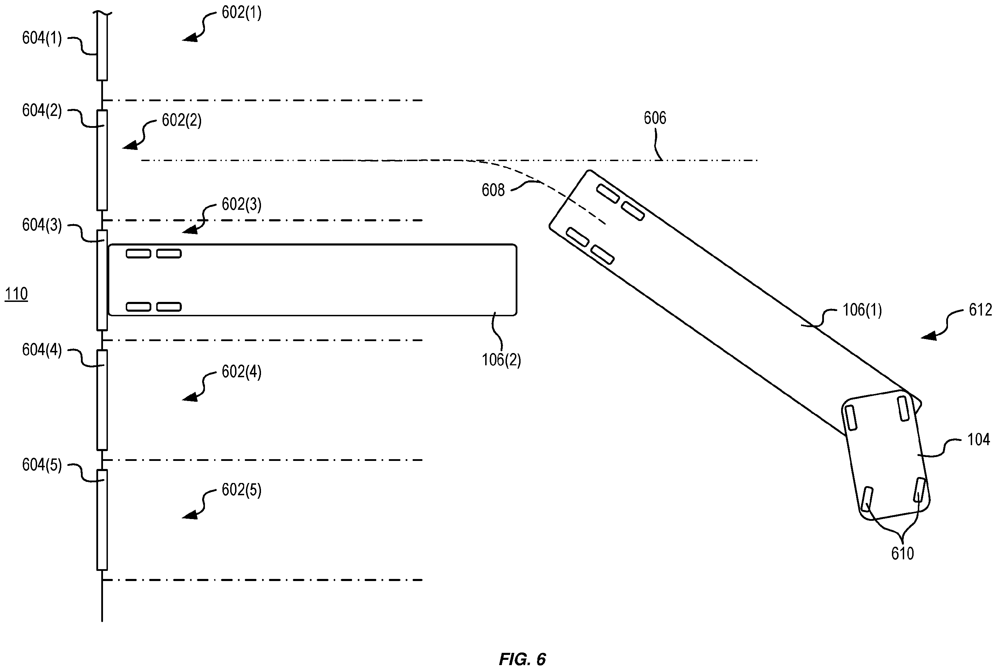

FIG. 6 is a schematic plan view illustrating tractor 104 backing trailer 106 up to one loading dock 602(2) of a plurality of adjacent loading docks 602(1)-(5) of warehouse 110. Tractor 104 coupled with trailer 106 may be referred to as vehicle 612. Each loading dock 602(1)-(5) has a corresponding loading door 604(1)-(5), and as shown, one trailer 106(2) is parked at loading dock 602(3). Since trailer doors are at the rear of trailer 106, trailer 106 is reversed up to loading dock 602 and is correctly aligned with loading door 604 to provide full and safe access to trailer 106. A reference path 606 may be defined for loading dock 602(2) to facilitate alignment of trailer 106(1) into loading dock 602(2). Maneuvering module 240 may predict a path 608 of trailer 106(1) when determining a steering angle 250 for steering wheels 610 of tractor 104.

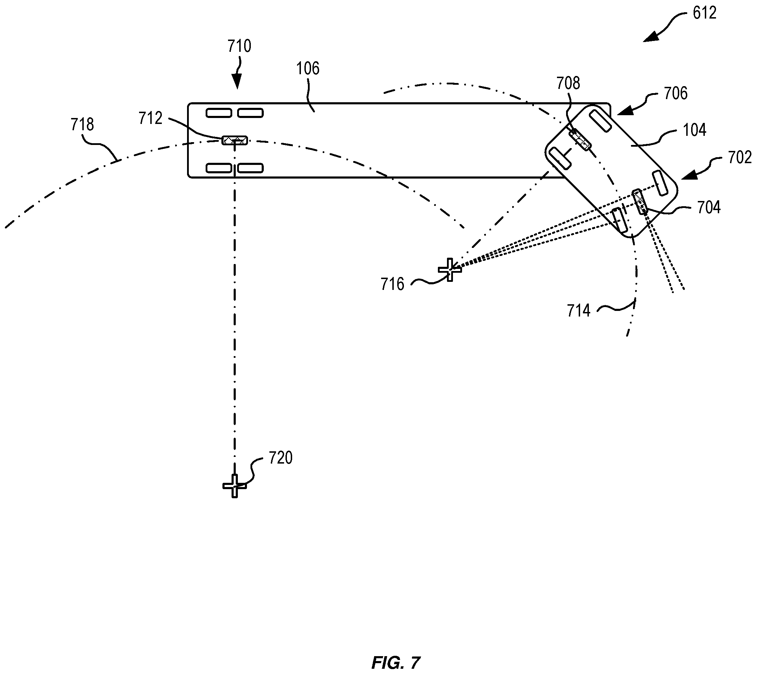

FIG. 7 is a schematic showing example assumptions made by maneuvering module 240 of tractor 104 when determining steering angle 250 for controlling tractor 104 to reverse trailer 106. For purposes of simplification, tractor 104 and trailer 106 are approximated in a kinematic bicycle model with nonholonomic constraints. A front axle 702 of tractor 104 is approximated by a single steerable modelled wheel 704 at the axle's center, a rear axle 706 of tractor 104 is approximated by a single non-steering modelled wheel 708 at the axle's center, and tandem 710 of trailer 106 is approximated as a single non-steering modelled wheel 712 centered in between both axles of tandem 710. This simplified representation of tractor 104 and trailer 106 allows any complex dynamic interactions between the actual wheels to be ignored and the nonholonomic constraint implies that none of the actual wheels move laterally. As shown in FIG. 7, tractor 104 is assumed to move along a circle 714 perpendicular to non-steering modelled wheel 708 about a tractor center of rotation 716, and trailer 106 is assumed to travel along a circle 718 perpendicular to non-steering modelled wheel 712 about a trailer center of rotation 720. This assumption is generally safe when tractor 104 and trailer 106 are moving at low speed (e.g., less than 15 miles-per-hour). Further assumptions include: tires do not deform, tires along an axle are properly aligned, and motion of the steering wheels of front axle 702 is approximated by the average angle the wheels.

However, to accurately back trailer 106 into loading dock 602(2), tractor 104 requires accurate knowledge of the position of the back end of trailer 106, and non-steering modelled wheel 712, relative to tractor 104.

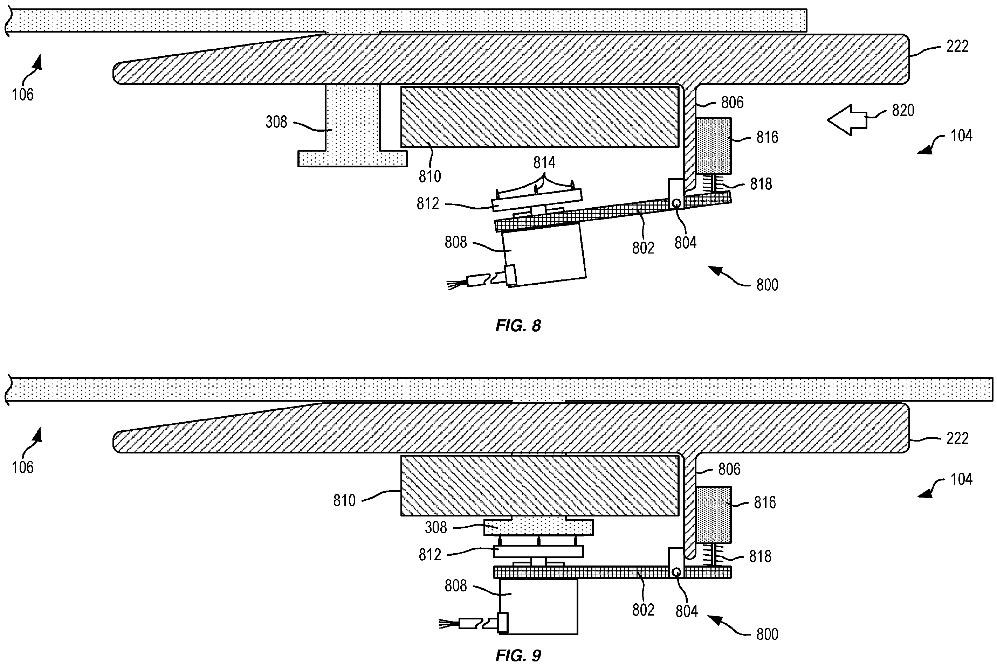

FIG. 8 is a schematic diagram showing one example trailer angle encoder 800 positioned beneath FW 222 of tractor 104 and in a disengaged position as tractor 104 couples (hitches) with trailer 106. Trailer angle encoder 800 may represent trailer angle encoder 204 of FIG. 2. FIG. 9 is a schematic showing trailer angle encoder 800 of FIG. 8 in an engaged position to mechanically couple with kingpin 308 of trailer 106 while tractor 104 and trailer 106 are coupled together. Trailer angle encoder 800 measures trailer angle by mechanically coupling with kingpin 308 of trailer 106. Trailer angle encoder 800 includes an arm 802 attached via a pivot 804 to an existing flange 806 of FW 222. An optical encoder 808 is positioned at a first end, away from pivot 804, of arm 802 such that it is positioned beneath, and pivoted away from, locking jaws 810 of FW 222. Trailer angle encoder 800 includes a disc 812 mechanically coupled with an input spindle of optical encoder 808 and having a plurality (e.g., three) vertical pins 814 (e.g., spikes, teeth, knife blades perpendicular to a lower surface of kingpin 308, etc.) positioned around an upper surface of disc 812. In the example of FIG. 8, a solenoid 816 operates to compress a spring 818 and pull a second end, opposite the first end, of arm 802 such that disc 812 and pins 814 are retracted away from locking jaws 810 as tractor 104 moves beneath trailer 106, as indicated by arrow 820. Accordingly, activating solenoid 816 moves disc 812, pins 814, and optical encoder 808 away from FW 222 as kingpin 308 is captured by locking jaws 810, thereby preventing damage to trailer angle encoder 800 during coupling and decoupling of trailer 106 from tractor 104. In other embodiments, operation of solenoid 816 and spring 818 may be reversed, whereby solenoid 816 is activated to move disc 812, pins 814, and optical encoder 808 towards FW 222 when tractor 104 and trailer 106 are coupled together. Other actuators may be used in place of solenoid 816 and spring 818 to move arm 802 without departing from the scope hereof.

FIG. 9 shows trailer angle encoder 800 of FIG. 8 mechanically coupled with kingpin 308 captured by locking jaws 810 of FW 222. With kingpin 308 captured by locking jaws 810, solenoid 816 is deactivated, allowing spring 818 to push down on the second end of arm 802, which pivots about pivot 804 such that the first end of arm 802 presses pins 814 into a bottom surface (e.g., of the kingpin flange) of kingpin 308. Pins 814 may be individually spring loaded to ensure good contact when the lower surface of kingpin 308 is uneven, and are durable (e.g., made of a hardened steel or titanium) and mechanically couple with the lower surface of kingpin 308 to cause disc 812 and input shaft of optical encoder 808 to rotate as kingpin 308 rotates relative to tractor 104. For example, the input shaft of optical encoder 808 has minimal rotational resistance, and thereby follows movement of kingpin 308 through contact of pins 814. Advantageously, once trailer 106 is coupled with of tractor 104, solenoid 816 is deactivated and spring 818 maintains pressure against arm 802 and pins 814 maintain contact with kingpin 308.

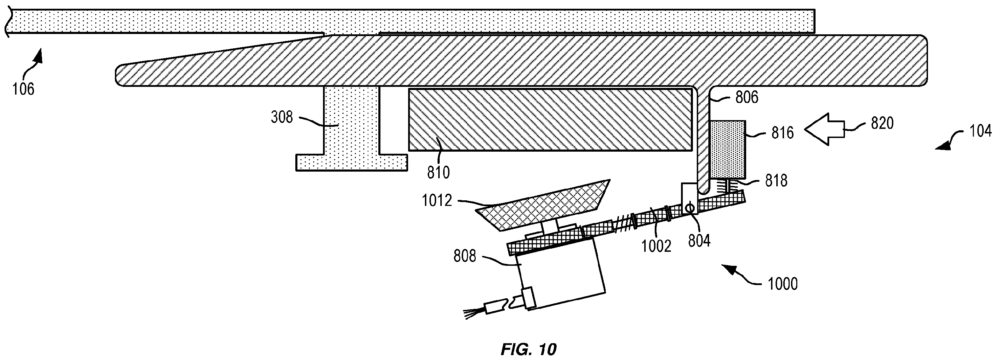

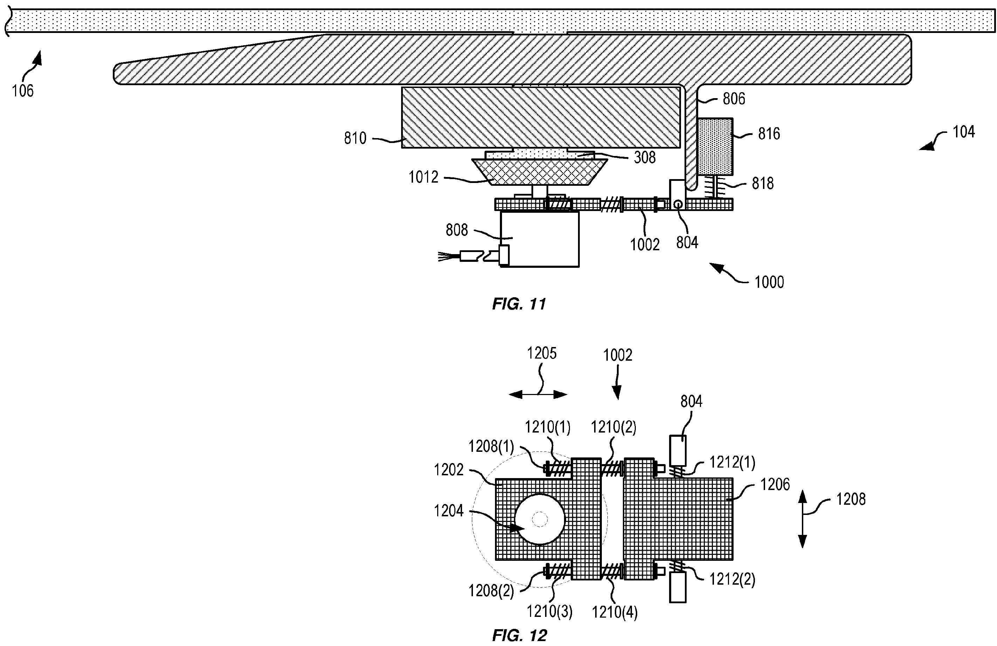

FIGs. 10-12 are schematic diagrams showing another example trailer angle encoder 1000 positioned beneath FW 222 of tractor 104 of FIG. 1. Trailer angle encoder 1000 may represent trailer angle encoder 204 of FIG. 2. FIG. 10 shows trailer angle encoder 1000 in a disengaged position as tractor 104 couples (hitches) with trailer 106 and FIG. 11 shows trailer angle encoder 1000 of FIG. 10 in an engaged position to mechanically coupled with kingpin 308 of trailer 106 while tractor 104 and trailer 106 are coupled together. FIG. 12 shows a longitudinally and laterally adjustable arm 1002 of trailer angle encoder 1000 in further detail. Trailer angle encoder 1000 is similar to trailer angle encoder 800 of FIGs. 8 and 9, except that trailer angle encoder 1000 includes a conical adapter 1012, in place of disc 812 and pins 814, for mechanically coupling with kingpin 308, and arm 802 is replaced by longitudinally and laterally adjustable arm 1002. Accordingly, only difference between trailer angle encoder 1000 and trailer angle encoder 800 will be described.

Conical adapter 1012 couples with the input shaft of optical encoder 808 and has a conical shape that tapers internally from a first diameter, nearest optical encoder 808, smaller than the diameter of the flange of kingpin 308 to a second diameter greater than the diameter of the flange of kingpin 308. Conical adapter 1012 is at least partially formed of a flexible material (e.g., rubber, polyurethane, oil resistant room-temperature-vulcanizing (RTV) silicone, etc.) that mechanically grips the flange of kingpin 308 when pressed there against to cause the input shaft of optical encoder 808 to rotate as kingpin 308 rotates relative to tractor 104. As shown in FIG. 10, solenoid 816 is activated to move conical adapter 1012 out of the path of kingpin 308 as tractor 104 couples with trailer 106. As shown in FIG. 11, once tractor 104 and trailer 106 are coupled, solenoid 816 is deactivated and conical adapter 1012 is pressed against the flange of kingpin 308 by spring 818.

As shown in FIG. 12, longitudinally and laterally adjustable arm 1002 allows both longitudinal and lateral movement to allow conical adapter 1012 to center on kingpin 308. Arm 1002 is formed of a first plate 1202 that forms an aperture 1204 for securing optical encoder 808 and a second plate 1206 that pivotably couples with pivot 804. Plates 1202 and 1206 are joined by two longitudinal shafts 1208(1) and 1208(2) that allow longitudinal movement, indicated by arrow 1205, of plate 1202 relative to plate 1206. Two springs 1210(1), 1210(2) are positioned on longitudinal shaft 1208(1), one on each side of at least part of plate 1202. Similarly, another two springs 1210(3), 1210(4) are positioned on longitudinal shaft 1208(2), one on each side of at least part of plate 1202. Accordingly, springs 1210 cause plate 1202 to return to a nominal longitudinal center position when conical adapter 1012 is decoupled from kingpin 308. Pivot 804 allows both rotation of plate 1206 around pivot 804 and lateral movement of plate 1206 along pivot 804. Two springs 1212(1) and 1212(2) are positioned on pivot 804, one on each side of at least part of plate 1206 and cause second plate 1206 to return to a nominal lateral center position when conical adapter 1012 is decoupled from kingpin 308.

In one embodiment, optical encoder 808 is a quadrature optical encoder that generates angular change 205 (e.g., a count of pulses that indicate the changing angle over time) as kingpin 308 (e.g., trailer 106) rotates relative to tractor 104. For example, with $\theta$ being an angle of trailer 106 relative to tractor 104, the quadrature encoder counter output with a 1024-line encoder is given by:

$$\theta(t) = \theta_0 + \frac{360}{4096} enc\_count$$

where $\theta_0$ is estimated by a Kalman filter.

The standard deviation of the quadrature encoder's quantization noise is:

$$\frac{\Delta}{\sqrt{12}} = \frac{\frac{360}{4096}}{\sqrt{12}} = 0.02537° \approx \frac{1}{40} degrees$$

and the signal to noise quantization ration is:

$$20 \, log_{10}(2^{14}) = 84 \, dB$$

Accordingly, optical encoder 808 provides a high-resolution measurement of change in the angle between trailer 106 and tractor 104. However, since the angle between tractor 104 and trailer 106 is unknown when tractor 104 couples with trailer 106, the relative change in angular position provided in angular change 502 by optical encoder 808 cannot indicate an absolute angle between tractor 104 and trailer 106.

**Determining trailer Angle Using LIDAR**

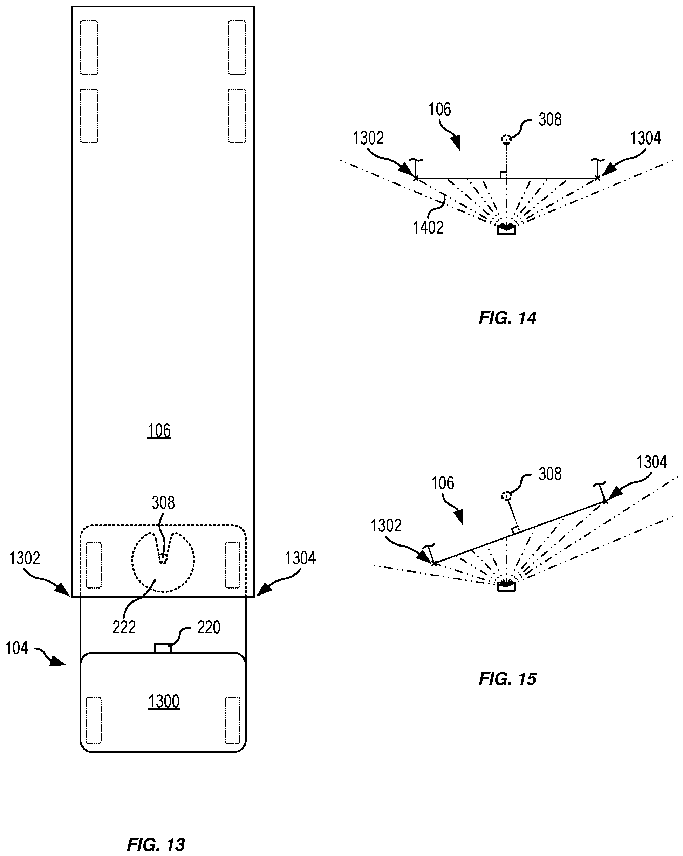

FIG. 13 shows LIDAR 220 mounted on a cab portion 1300 of tractor 104 to face trailer 106. Kingpin 308 of trailer 106 is captured by FW 222, and is therefore a point of rotation of trailer 106 relative to tractor 104. FIG. 14 is a schematic illustrating example operation of LIDAR 220 to detect front corners 1302 and 1304 of trailer 106 when trailer 106 is in-line with tractor 104. FIG. 15 is a schematic illustrating example operation of LIDAR 220 to detect front corners 1302 and 1304 of trailer 106 when trailer 106 is at a twenty-degree angle to tractor 104. As shown, corners 1302 and 1304 (e.g., the front of trailer 106) rotate about kingpin 308. FIGs. 13, 14, and 15 are best viewed together with the following description.

LIDAR 220 generates point cloud 221 by scanning at least one beam 1402 of light and detecting light reflected from objects in the path of the light. LIDAR 220 is positioned on a rear facing surface of a cab portion 1300 of tractor 104 and thereby scans beam 1402 across at least a front end of trailer 106. Each point in point cloud 221 defines a distance r and an angle $\theta$. The following discussion uses n-row column vectors ($n \geq 2$), and $M$ and $b$ scalers. When beam 1402 misses the front end of trailer 106, r has a high value, and thus the data may be ignored for purposes of trailer angle calculations. Accordingly, beams 1402 corresponding to corners 1302 and 1304 of trailer 106 may be easily identified in data from LIDAR 220.

The [$r$, $\theta$] LIDAR data (e.g., point cloud 221) is converted into [$x$, $Y$] coordinate form, such that:

$$Y = M \cdot x + b,$$

$$Y = \begin{bmatrix} x \, [1] \end{bmatrix} \begin{bmatrix} M \\ b \end{bmatrix},$$

*and*

$$\begin{bmatrix} M \\ b \end{bmatrix} = \left( \begin{bmatrix} x & [1] \end{bmatrix}^{T} \begin{bmatrix} x & [1] \end{bmatrix} \right)^{-1} \begin{bmatrix} x & [1] \end{bmatrix}^{T} Y$$

Giving:

$$Trailer\,Angle = tan^{-1}(M)$$

LIDAR angle estimator 510 includes at least one algorithm that implements at least part of the equations described above to determine LIDAR angle 512 based upon point cloud 221. Advantageously, LIDAR angle estimator 510 generates LIDAR angle 512 independently of specific dynamics (e.g., length) trailer 106. In certain embodiments, LIDAR angle estimator 510 may be invoked at intervals and/or on demand to generate LIDAR angle 512 to check current trailer angle 233 generated by other means, and/or may provide input to update of current trailer angle 233.

**Determining Trailer Angle through Short Movement**

In an alternative embodiment, an initial angle of trailer 106 is estimated using a Kinematic equation model, a short move of tractor 104 and trailer 106, and measured change in trailer angle by trailer angle encoder 204. The Kinematic equation model is defined as follows. Circular motion is defined as:

$$v = r * \omega$$

giving

$$\dot{\phi} = \omega = \frac{v}{r}$$

where r is the circle's radius (radius of curvature, $curvature = \frac{1}{r}$ ). Kinematic equations of tractor 104 and trailer 106 are defined as:

$$\dot{x} = v(t)\,cos\big(\phi(t)\big)$$

$$\dot{y} = v(t)\,sin\big(\phi(t)\big)$$

$$\dot{\phi} = \frac{v(t)}{r} = \frac{v(t)}{L} \tan\left(\delta(t)\right)$$

$$\dot{\theta} = \frac{v(t)}{r} = -\frac{v(t)}{L_2} \sin\left(\theta(t) - \phi(t)\right)$$

where x, y is position, $\phi$ is a heading of tractor 104, and $\theta$ is a heading of trailer 106.

Solving for steering angle:

$$\delta(t) = \tan^{-1}\left(\frac{L}{r}\right)$$

and solving for trailer angle (e.g., angle between tractor 104 and trailer 106):

$$\theta(t) - \phi(t) = \sin^{-1}\left(-\frac{L_2}{r}\right)$$

where L is the length of tractor 104 (e.g., the distance between single steerable modelled wheel 704 and single non-steering modelled wheel 708), and $L_2$ is the length of trailer 106 (e.g., the distance between kingpin 308 and single non-steering modelled wheel 712).

Accordingly, the radius of curvature of trailer 106 is:

$$r_{trailer} = sqrt(r^2 - L_2^2)$$

Initial angle estimator 520, FIG. 5, may implement at least one algorithm based on the above equations to determine optical trailer angle 522 based on angular change 502. Advantageously, initial angle estimator 520 operates independently of trailer specifics such as length of trailer 106. In one example of operation, initial angle estimator 520 reads trailer angle encoder 204 (e.g., to reset the quadrature encoder counter), controls tractor 104 to move a short distance, and then reads an angular change 502 from optical encoder 808. To ensure any angular change is not lost in quantization noise, the short distance moved should be at least one meter. For example, an angular change of two-and-a-half degrees would require a one-meter movement for a twenty-five-meter radius turn. Initial angle estimator 520 then calculates a current angle of trailer 106 relative to tractor 104 based on the distance moved $\Delta S$, angular change 502, and the following equations.

$$\Delta\theta = -\frac{\Delta S}{L_2}\sin(\theta_0 + \Delta\theta - \phi_0 - \Delta\phi)$$

giving

$$\theta_0 = \Delta\phi + \phi_0 - \Delta\theta + \sin^{-1}\left(-\frac{L_2\Delta\theta}{\Delta S}\right)$$

Initial angle estimator 520 may be invoked after tractor 104 couples with trailer 106 to determine optical trailer angle 522 that is used to determine an initial value for current trailer angle 233. Thereafter, encoder estimator 530 updates current trailer angle 233 based on angular changes 502 from trailer angle encoder 204 (e.g., from optical encoder 808). In certain embodiments, initial angle estimator 520 is invoked at intervals, or on demand, to validate and/or update current trailer angle 233.

In certain embodiments, encoder estimator 530 may process both angular change 502 and LIDAR angle 512 to update current trailer angle 233. Encoder estimator 530 may also process input from other means of determining current trailer angle 233, such as where trailer angle is determined from images captured by camera 218.

## Mast Mounted LIDAR

In certain embodiments, LIDAR 220 may be mounted to an extensible mast on tractor 104, so that it may be raised to an elevation sufficient for it capture trailer 106 and allow current trailer angle 233 to be determined. For example, the mast may be extended after tractor 104 couples with trailer 106 and while tractor 104 is stationary, to reduce loads on the extended mast. After LIDAR data is captured, the mast may be retracted before tractor 104 moves (e.g., to remain below vehicle max height limits).

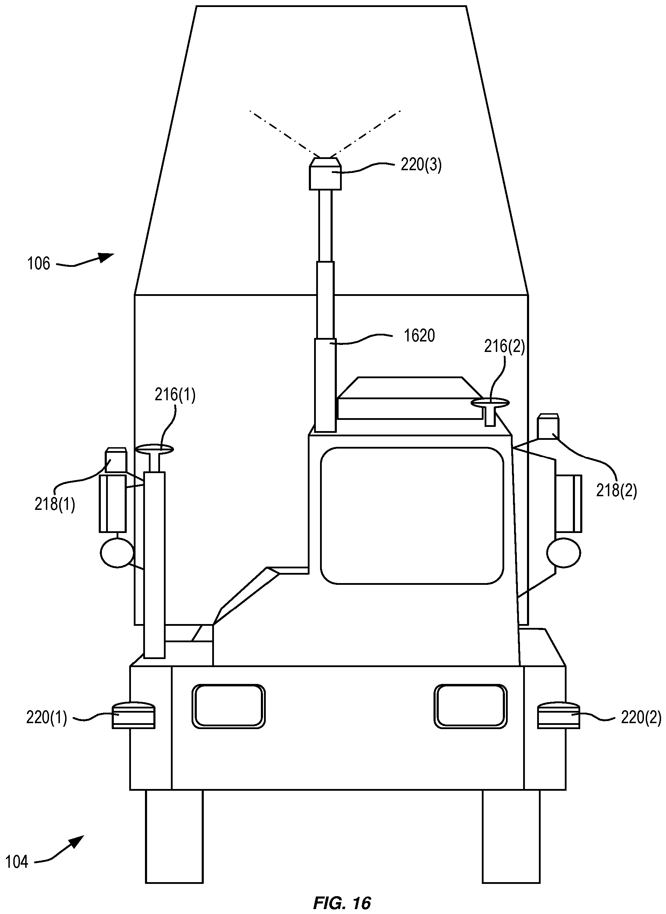

FIG. 16 is a front perspective view of tractor 104 coupled with trailer 106, showing a LIDAR 220(3) mounted to an extensible mast 1620. In certain embodiments, mast 1620 incorporates upward facing sensors, a range finder, or similar sensors, to warn and prevent the extending mast from colliding with overhead obstructions. Further, mast 1620 may be stabilized by guy wires (not shown) that deploy from damped retracting reels and thereby reduce sway of LIDAR 220(3) when mast 1620 is extended. Similarly, horizontal extending arms may be included to extend one or more sensors (e.g., camera 218 and/or LIDAR 220) horizontally. By raising the sensors above the height of trailer 106, or away from the sides of trailer 106, the sensors are not blocked by trailer 106 and may thereby gain an improved perspective of a position of trailer 106 relative to tractor 104.

By way of example, mast 1620 may be implemented as a Rolatube™ (however, other extenders may also be used) that extends vertically, horizontally, or at some other angle, from tractor 104 to provide one or more sensors with a better (e.g., bird's eye) view of trailer 106. For example, the Rolatube may provide an extension between ten and twenty feet that would allow a sensor (e.g., camera 218 and/or LIDAR 220) a view around the side of trailer 106 at just about any backing position and angle. In certain embodiments, the extensive mast is mounted on a turret with continuous rotation about a vertical axis, and further, a second actuator may transition the turret from horizontal to vertical. The turret may include slip ring connections for power and signal.

Additionally, a motorized element at the end of the Rolatube could be used with the turret to position one or more sensors at the edge or back of a trailer such that they may look back.

## Magnetically Coupled Trailer Angle Encoder

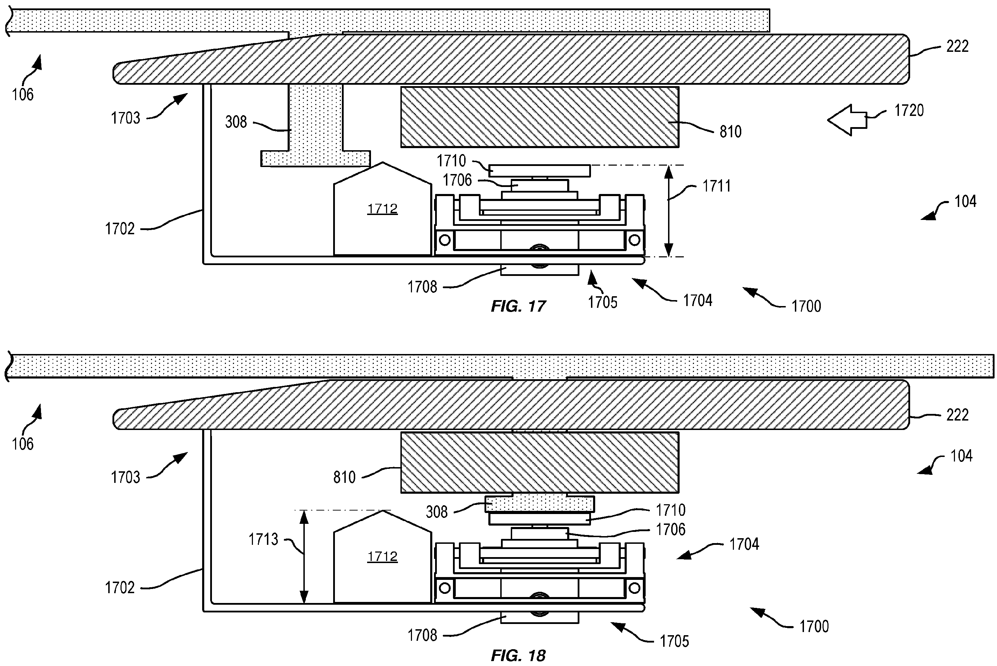

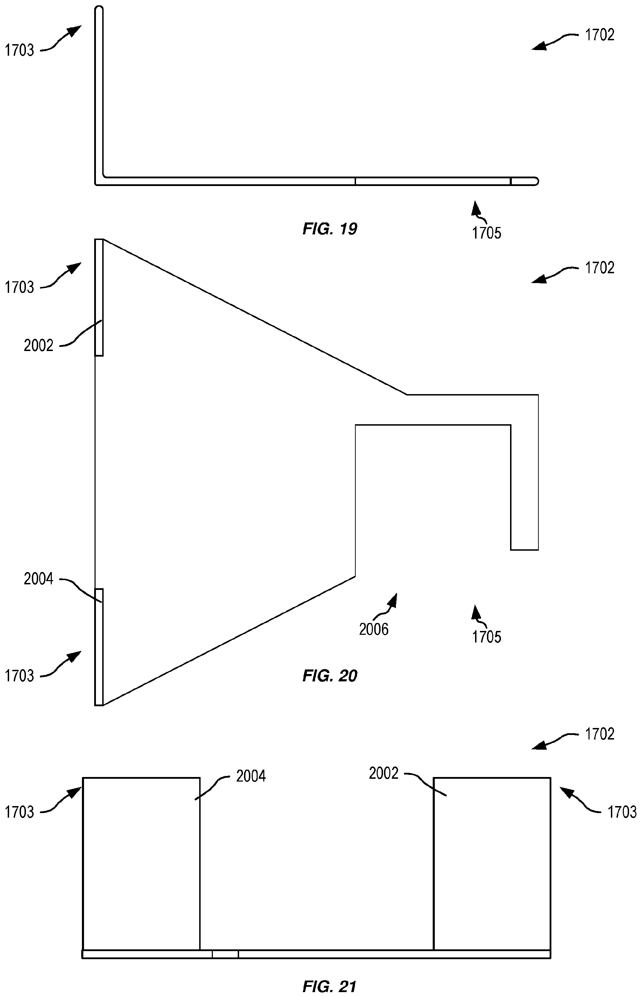

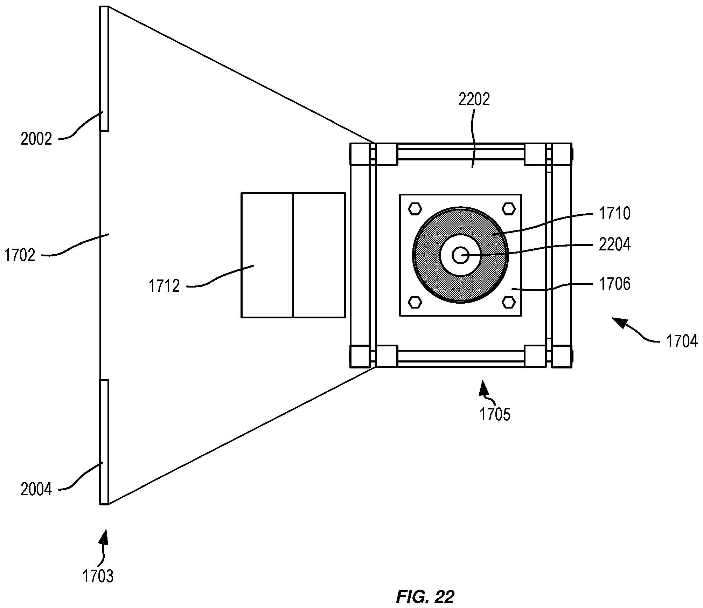

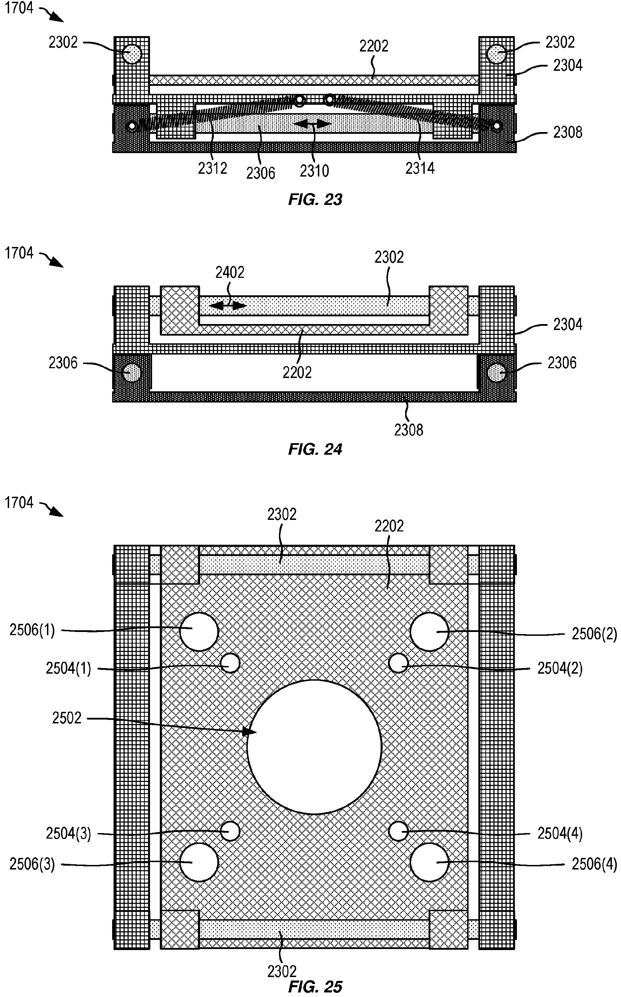

FIGs. 17 is a schematic diagram showing one example magnetically coupled trailer angle encoder 1700 positioned beneath FW 222 of tractor 104 prior to tractor 104 coupling (hitching) with trailer 106. Trailer angle encoder 1700 includes a spring plate 1702, a two-axis positioning table 1704, a bearing 1706, an optical encoder 1708, a magnet 1710, and a clearance and cleaning block 1712. FIG. 18 is a schematic showing magnetically coupled trailer angle encoder 1700 of FIG. 17 magnetically coupled with kingpin 308 of trailer 106 that is hitched to tractor 104. FIGs. 19, 20 and 21 shows side, top and front elevations, respectively, of spring plate 1702 of FIGs. 17 and 18. FIG. 22 is a top view of magnetically coupled trailer angle encoder 1700. FIGs. 23, 24, and 25 are front, side, and top elevations, respectively, of two-axis positioning table 1704 of FIGs. 17 and 18. FIGs. 17-25 are best viewed together with the following description.

Trailer angle encoder 1700 is one example implementation of trailer angle encoder 204 of FIG. 2. Trailer angle encoder 1700 measures trailer angle of trailer 106 using a magnetically coupled optical encoder with kingpin 308 and thereby capturing its rotational movements relative to tractor 104. Spring plate 1702 is made from spring steel for example and attaches, at a first end 1703, to FW 222. In certain embodiments, first end 1703 of spring plate 1702 includes structure and/or fasteners that attach to a flange or other structure beneath and towards the rear (relative to tractor 104) of FW 222 without obstructing coupling of FW 222 with kingpin 308 of trailer 106. In embodiments shown in FIGs. 19-21, plate 1702 may be shaped to attach either side of a rear opening of FW 222 that receives kingpin 308.

Two-axis positioning table 1704 is attached to a second end 1705 of spring plate 1702, opposite to first end 1703, whereby spring plate 1702 positions two-axis positioning table 1704 beneath locking jaws 810 of FW 222. Two-axis positioning table 1704 movably supports bearing 1706 and a shaft of optical encoder 1708 passes through bearing 1706 and rigidly attaches to magnet 1710. Accordingly, magnet 1710 is positioned beneath locking jaws 810 such that it attached to kingpin 308 when kingpin 308 is captured by locking jaws 810.

Clearance and cleaning block 1712 is a block with slopes forming a ridge and is positioned immediately behind two-axis positioning table 1704. In certain embodiments, block 1712 is solid and made of durable plastic or rubber with a height 1713 that is greater than a height 1711 of a top surface of magnet 1710, with respect to spring plate 1702. Block 1712 has two functions: (a) it cleans a bottom surface of kingpin 308 as tractor 104 moves beneath trailer 106 during hitching, and (b) it depresses spring plate 1702 as kingpin 308 moved across it and forces it downward, there preventing kingpin 308 from impacting a side of magnet 1710. As tractor 104 moves under trailer 106, block 1712 wipes dirt from the bottom surface of kingpin 308 and moves off of kingpin 308 as kingpin 308 is seated within FW 222 and locked into place by locking jaws 810. As kingpin 308 moves off block 1712, spring plate 1702 returns to its nominal position and an upper surface of magnet 1710 contacts the (cleaned) lower surface of kingpin 308.

Since kingpin 308 is steel, magnet 1710 magnetically adhered to kingpin 308. Two-axis positioning table 1704 allows minor offsets in alignment of the shaft of optical encoder 1708 and the rotational center of kingpin 308, and for movement of kingpin 308 relative to tractor 104 during maneuvering of trailer 106. For example, forces applied by tractor 104 to move trailer 106 may result in small lateral movements of kingpin 308 relative to FW 222.

A magnetic force attracts magnet 1710 to kingpin 308 resulting in friction between the bottom surface of kingpin 308 and a top surface of magnet 1710. Rotation of kingpin 308 relative to FW 222 (e.g., tractor 104) results in an angular force applied to magnet 1710 that is greater than any combined angular resistance of bearing 1706 and optical encoder 1708. Accordingly, rotation of kingpin 308 results in rotation of optical encoder 1708.

As shown in FIGs. 19-21, first end 1703 of spring plate 1702 may form two folded lugs 2002 and 2004 that are spaced to attach to the structure beneath and to the rear of FW 222 without blocking ingress of kingpin 308 into locking jaws 810. Spring plate 1702 may also form a notch 2006 at second end 1705 that receives optical encoder 1708, which extends below two-axis positioning table 1704 and allows electrical connection therewith. Notch 2006 may have other shapes and sizes without departing from the scope hereof.

As shown in FIGs. 22-25, two-axis positioning table 1704 has a top platform 2202 that forms a first aperture 2502 and four mounting holes 2504(1)-(4) for coupling with optical encoder 1708. Top platform 2202 also has four mounting holes 2506(1)-(4) for attaching bearing 1706 to top platform 2202. Top platform 2202 slidably attaches to two parallel transverse rods 2302 that allow top platform 2202 to slide as indicated by arrow 2402. A middle structure 2304 supports transverse rods 2302 and attaches to two parallel transverse rods 2306 that are perpendicular to transverse rods 2302 and that allows middle structure 2304 to move as indicated by arrow 2310. Transverse rods 2306 are supported by a bottom structure 2308 that fixedly attaches to spring plate 1702. Accordingly, relative to spring plate 1702, top platform 2202 has lateral movement, indicated by arrows 2402 and 2310, but is unable to rotate.

In certain embodiments, as shown in FIG. 23, two-axis positioning table 1704 includes two springs 2312 and 2314 that each have first ends attached near a center of one side of middle structure 2304 and opposite ends attaches to opposite ends, respectively, of the same side of bottom structure 2308. Springs 2312 and 2314 operates to center middle structure 2304 on bottom structure 2308 when no forces are applied to top platform 2202. Forces applied by springs 2312 and 2314 are less than a force required to move magnet 1710 against kingpin 308. That is, springs 2312 and 2314 center middle structure 2304 on bottom structure 2308 until magnet couples with kingpin 308.

## Alternative Actuation

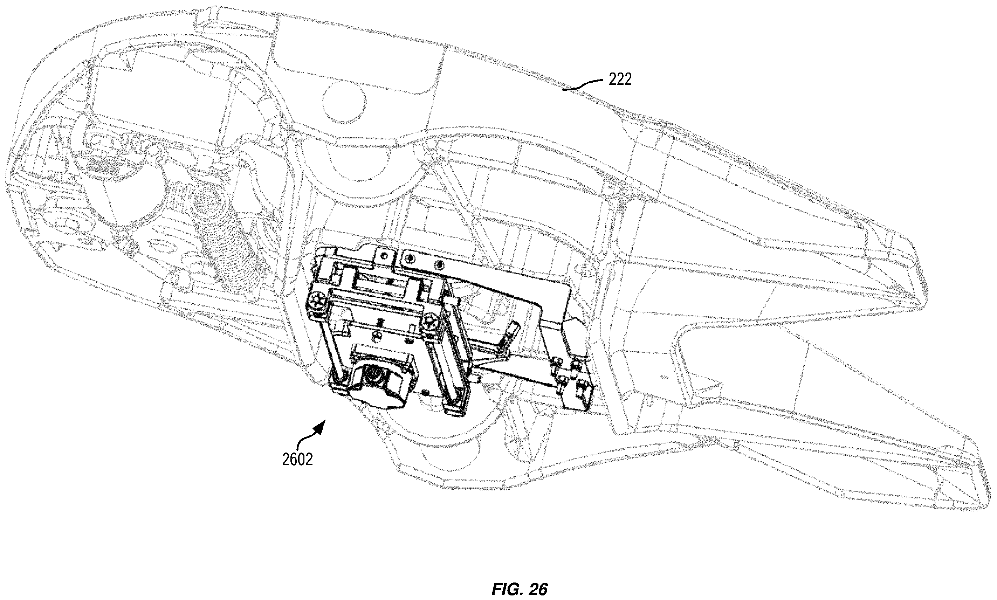

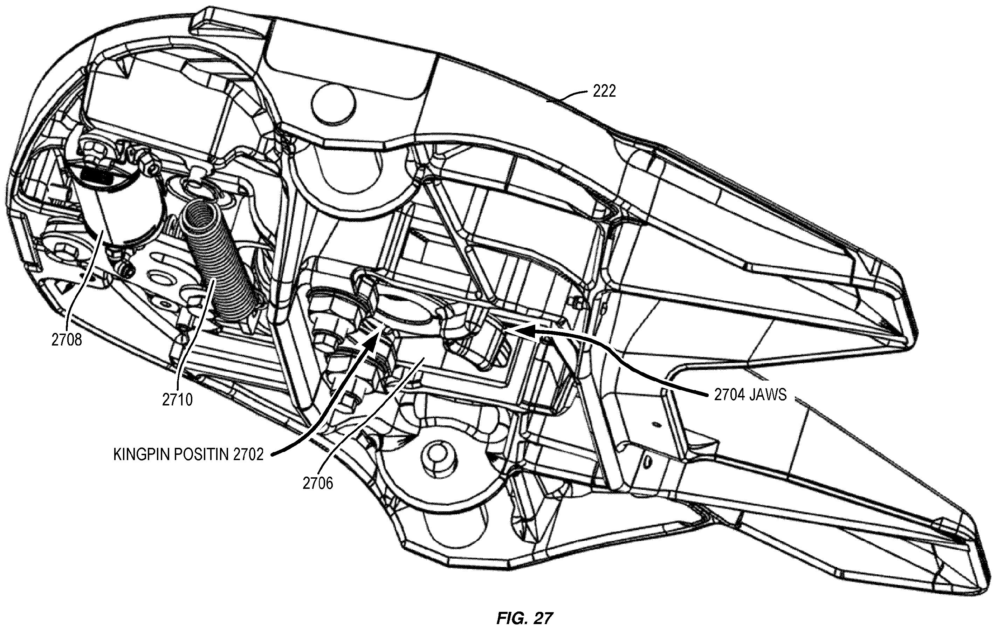

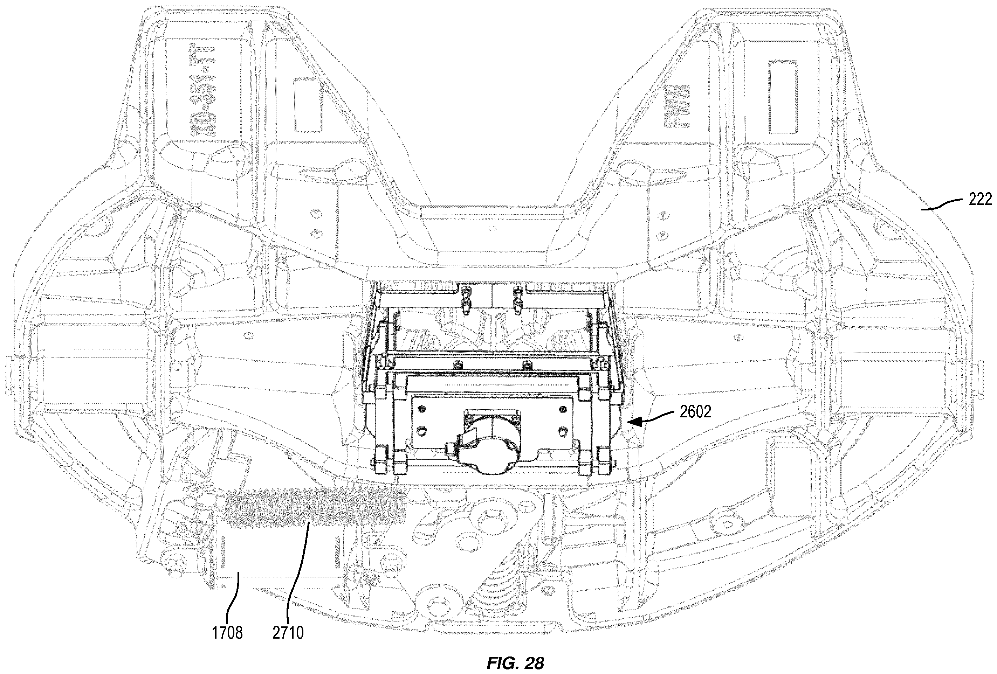

FIG. 26 is a bottom perspective view of FW 222 of FIG. 2 fitted with a trailer angle encoder 2602 actuated by a yoke of FW 222, in embodiments. FIG. 27 is a bottom perspective view of FW 222 of FIG. 2 prior to fitting of trailer angle encoder 2602 of FIG. 26. FIG. 28 is an alternative bottom perspective view of FW 222 of FIG. 2 fitted with trailer angle encoder 2602 of FIG. 26, in embodiments.

As shown trailer angle encoder 2602 is positioned at Kingpin position 2702 and beneath jaws 2704 of FW 222. Particularly, in this position, trailer angle encoder 2602 does not interfere with operation of FW 222 when tractor 104 couples with trailer 106, but magnetically couples with kingpin 308 to detect changes in the angle of trailer 106 relative to tractor 104, as described in detail above. Jaws 2704 are locked closed (e.g., around kingpin 308) by a locking-device 2706 (e.g., a yoke in this embodiment) when kingpin 308 is captured by FW 222. Locking-device 2706 is mechanically withdrawn by a pneumatic actuator 2708, under control of controller 206, to allow jaws 2704 to open when tractor 104 is coupling with, or decoupling from, trailer 106. When tractor 104 is moving trailer 106, pneumatic actuator 2708 and/or a return spring 2710 causes locking-device 2706 to extend and lock jaws 2704 closed around Kingpin 308. However, fitting of trailer angle encoder 2602 to FW 222 does not impede operation of FW 222.

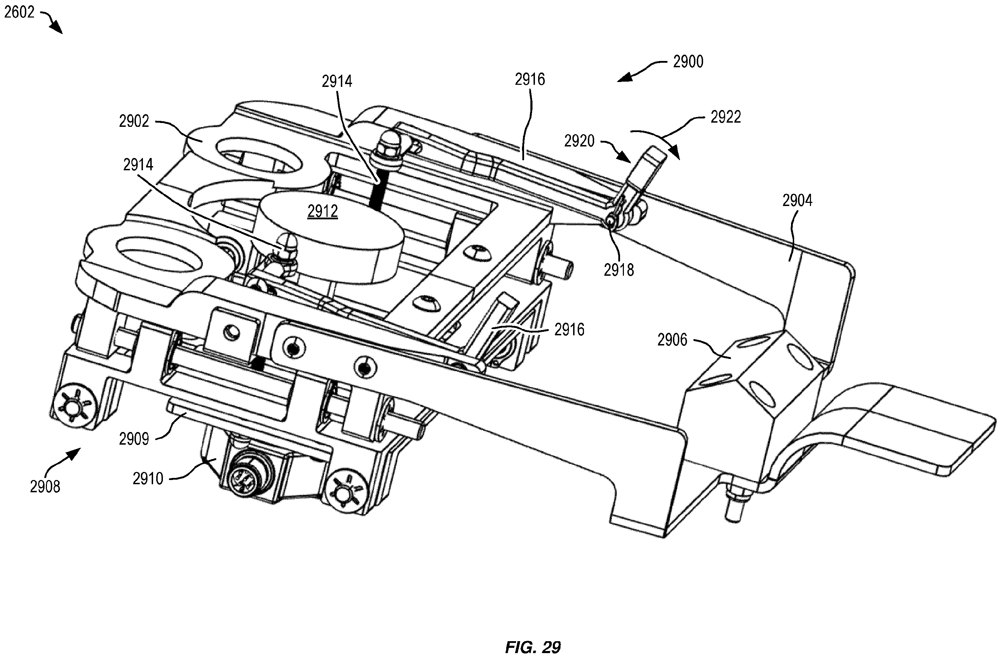

FIG. 29 is a schematic diagram illustrating trailer angle encoder 2602 of FIGs. 26 and 28 in further example detail, in embodiments. In FIG. 29, trailer angle encoder 2602 is shown without FW 222 for clarity of illustration. Trailer angle encoder 2602 includes a mounting bracket 2902 that supports a frame 2904 with a cleaning block 2906 (e.g., similar to block 1712 of FIG. 17) that is positioned to clean a bottom surface of kingpin 308 as kingpin 308 enters FW 222 during coupling. Trailer angle encoder 2602 includes a two-axis positioning table 2908, similar to two-axis positioning table 1704 of FIGs. 17, 18, and 23-25, that supports a bottom plate 2909 configure to move vertically with respect to two-axis positioning table 2908. An optical encoder 2910 with a bearing and shaft and a magnet 2912 mount to bottom plate 2909. Optical encoder 2910, bearing, shaft and magnet 2912 are similar to optical encoder 1708, bearing 1706, shaft, and magnet 1710 of FIG. 17. Note that two-axis positioning table 2908 attaches to an underside of FW 222 and is inverted in comparison to two-axis positioning table 1704.

Trailer angle encoder 2602 includes a deployment mechanism 2900 that automatically deploys optical encoder 2910 and magnet 2912 to couple with kingpin 308 once it is captured by jaws 2704 of FW 222. That is, optical encoder 2910 and magnet 2912 are undeployed when jaws 2704 are not locked. When undeployed, optical encoder 2910 and magnet 2912 are lower than kingpin 308 as it enters jaws 2704 and therefore 308 cannot contact a side of magnet 2912 as it enters jaws 2704. Advantageously, this prevents damage to trailer angle encoder 2602 from kingpin 308.

Deployment mechanism 2900 includes at least one vertical shaft 2914 linked to at least one actuation arm 2916 attached to mounting bracket 2902 by a pivot 2918. In the example of FIG. 29, deployment mechanism 2900 includes two vertical shafts 2914 each coupled to a different one of two actuation arms 2916, where each actuation arm 2916 forms an "L" shape such that a shorter end 2920 protrudes above mounting bracket 2902 and engages with locking-device 2706, such as at a rearward end for example.

In this example, deployment mechanism 2900 is configured to couple with locking-device 2706 in the form of a yoke that locks dual jaws 2704; however, deployment mechanism 2900 may be adapted to couple with different types of locking-device 2706, different styles of jaws 2704 (e.g., a single jaw), and other makes and models of fifth-wheel, such as by adapting and/or moving one or more of actuation arms 2916, pivot 2918, and horizontal shaft 3102, for example.

Bottom plate 2909 is supported from mounting bracket 2902 by two vertical shafts 2914 that are each linked to an actuation arm 2916 that attaches to mounting bracket 2902 by a pivot 2918. Accordingly, bottom plate 2909 moves vertically as actuation arms 2916 rotate around pivots 2918. Accordingly, as locking-device 2706 moves (e.g., rearward towards trailer 106) to lock jaws 2704, locking-device 2706 actuates deployment mechanism 2900 by causing actuation arms 2916 to rotate around pivots 2918 as indicated by arrow 2922, which in turn raises bottom plate 2909 via vertical shafts 2914, thereby raising magnet 2912 to engage with a lower surface of kingpin 308 within jaws 2704.

When locking-device 2706 is retracted (e.g., moved towards tractor 104 by pneumatic actuator 2708), deployment mechanism 2900 is deactivated as actuation arms 2916 are released, which allows bottom plate 2909 to drop (e.g., away from kingpin 308), and allows magnet 2912 to disengage from kingpin 308 as trailer 106 decouples from tractor 104. In certain embodiments, deployment mechanism 2900 includes at least one spring (not shown) that overcomes the magnetic force between magnet 2912 and kingpin 308 when locking-device 2706 is retracted to unlock jaws 2704 causing deployment mechanism 2900 to become undeployed. For example, springs may be positioned around each of vertical shaft 2914 between bottom plate 2909 and bottom structure 3006.

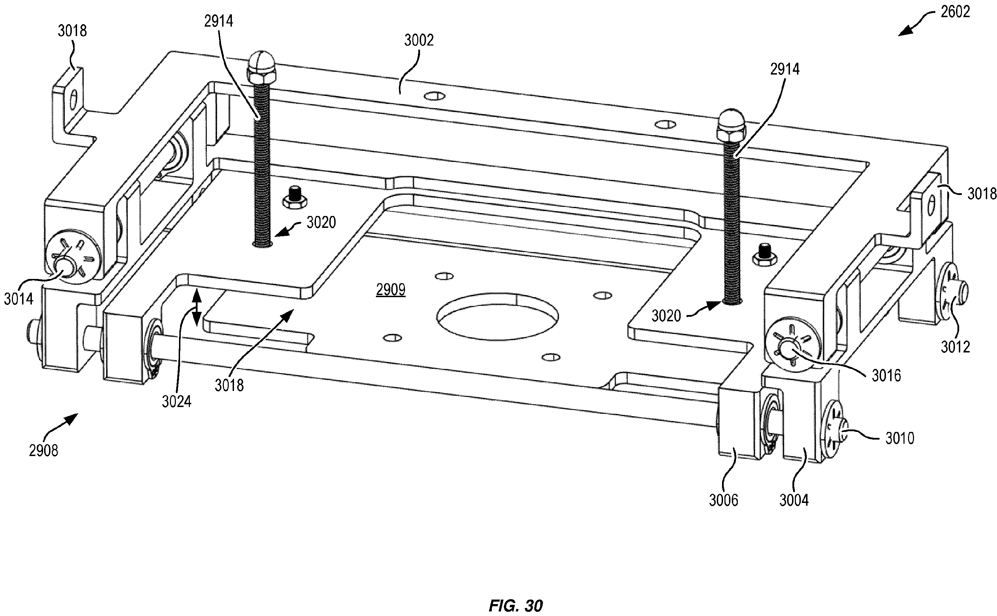

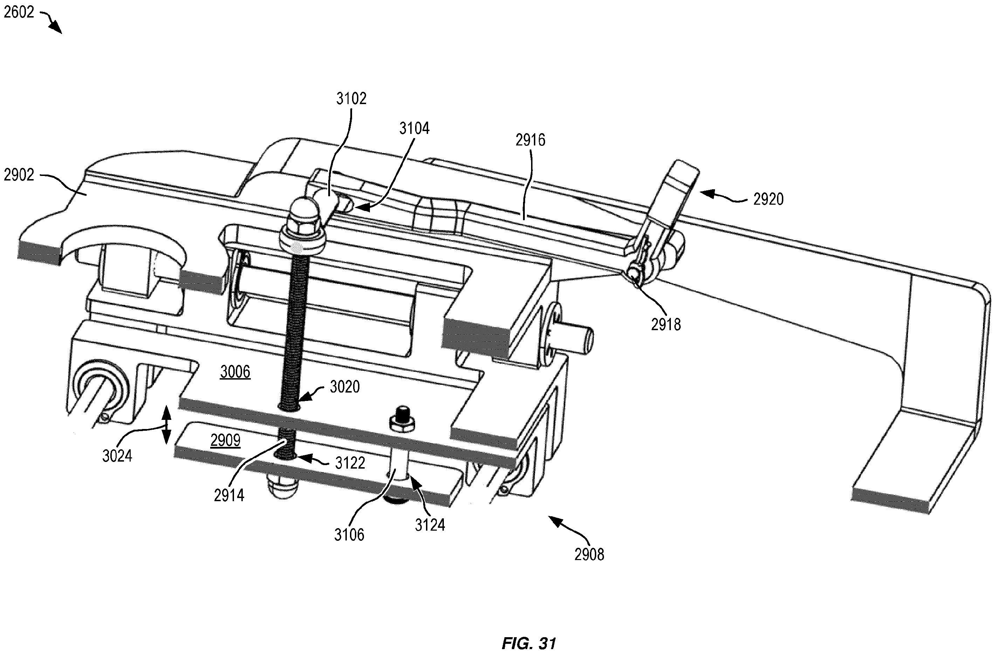

FIG. 30 is a perspective view of a portion of trailer angle encoder 2602 of FIGs. 26, 28, and 29, illustrating two-axis positioning table 2908 and bottom plate 2909 in further example detail, in embodiments. FIG. 31 is a schematic diagram illustrating a cut-away portion of trailer angle encoder 2602 of FIGs. 26, 28, and 29 to show further detail of two vertical shafts 2914, actuation arm 2916, and pivot 2918, in embodiments. FIGs. 29, 30 and 31 are best viewed together with the following description.

Two-axis positioning table 2908 includes a top structure 3002, a middle structure 3004, a bottom structure 3006, and a bottom plate 2909. Two parallel transverse rods 3010 and 3012 slidably couple bottom structure 3006 to middle structure 3004 and two parallel transverse rods 3014 and 3016 slidably couple middle structure 3004 to top structure 3002. As shown, bottom structure 3006 forms a cutout 3018 that allows the bearing and optical encoder 2910 to mount to bottom plate 2909. Although not shown in FIGs. 29, 30, and 31, two-axis positioning table 2908 may include springs (e.g., similar to springs 2312 and 2314 of two-axis positioning table 1704) that center middle structure 3004 and bottom structure 3006 to top structure 3002 when magnet 2912 is not coupled with kingpin 308.

Each vertical shaft 2914 couples with a corresponding actuation arm 2916 via a horizontal shaft 3102 that slidably sits within an elongated slot 3104 of one actuation arm 2916. The elongated slot is sized such that horizontal shaft 3102 remains horizontal to raise vertical shaft 2914 and lift bottom plate 2909. Elongated slot 3104 allows movement of vertical shaft 2914 as kingpin 308 moves relative to FW 222 during operation of tractor 104 to maneuver trailer 106 within autonomous yard 100. That is, as magnet 2912 follows movement of kingpin 308, optical encoder 2910 and bottom plate 2909 also follow the movement, whereas mounting bracket 2902 does not move since it is rigidly mounted to structure of FW 222.

Each vertical shaft 2914 passes through two aligned apertures 3020 and 3122 within bottom structure 3006 and bottom plate 2909, respectively. Each end of each vertical shaft 2914 is widened (e.g., fitted with a nut as shown) to prevent the corresponding end of the shaft passing through the aperture in horizontal shaft 3102 and aperture 3122 of bottom plate 2909. Accordingly, as actuation arms 2916 rotates around pivot 2918, horizontal shaft 3102 lifts vertical shaft 2914, which in turn lifts bottom plate 2909 as indicated by arrow 3024.

Bottom plate 2909 and bottom structure 3006 may have additional aligned apertures (e.g., aperture 3124 in bottom plate 2909) through which an alignment shaft 3106 is fitted. Aperture 3124 is sized to allow bottom plate 2909 to slide vertically while maintaining alignment of bottom plate 2909 with bottom structure 3006. Each end of alignment shaft 3106 is widened (e.g., fitted with a nut as shown) to prevent it passing through the apertures within bottom structure 3006 and bottom plate 2909. Lengths of vertical shaft 2914 and alignment shaft 3106 are selected to provide bottom plate 2909 with a desired amount of vertical movement. Advantageously, vertical shaft 2914 and alignment shaft 3106 maintain substantially parallel alignment of bottom plate 2909 with bottom structure 3006, and thereby with mounting bracket 2902 and FW 222, to ensure correct contact between magnet 2912 and a bottom surface of kingpin 308. Other mechanisms may be included to maintain alignment of magnet 2912 with kingpin 308 without departing from the scope hereof.

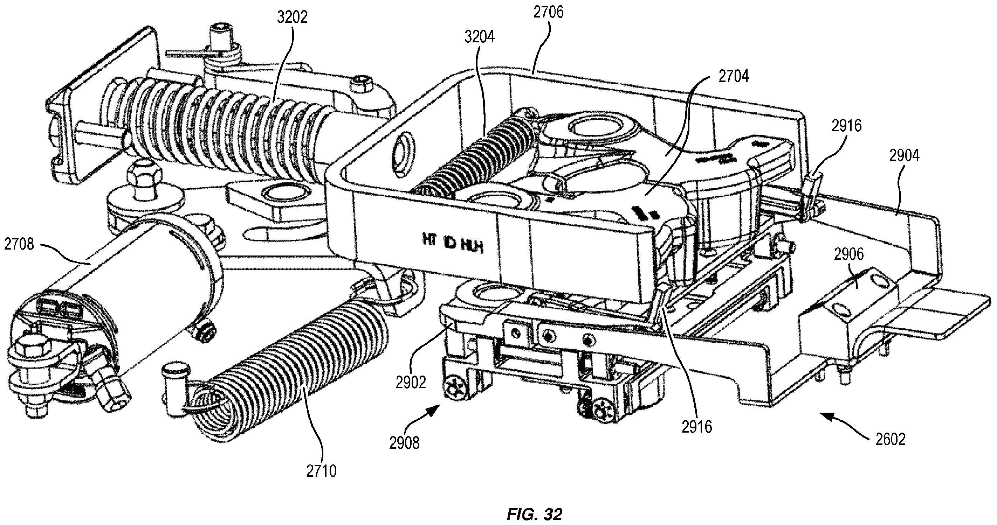

FIG. 32 is a perspective diagram illustrating locking-device 2706 locking jaws 2704 and causing actuation arms 2916 to lift bottom plate 2909, optical encoder 2910, and magnet 2912, in embodiments. Other parts of FW 222 are omitted for clarity of illustration. Pneumatic actuator 2708 is actuated (e.g., supplied with air) to retract locking-device 2706 and allow jaws 2704 to open. When kingpin 308 is within jaws 2704, jaws 2704 open as tractor 104 moves forward while locking-device 2706 is retracted. When kingpin 308 is not within jaws 2704, retracting locking-device 2706 allows a jaw spring 3204 to open jaws 2704. When jaws are opened, jaws 2704 prevent locking-device 2706 from deploying to lock jaws 2704 until jaws 2704 are closed, by engaging with kingpin 308 for example. A locking spring 3202 (e.g., part of FW 222) applies a force to cause locking-device 2706 automatically lock jaws 2704 when jaws 2704 close, such as when kingpin 308 presses against a front (e.g., tractor side) part of jaws 2704. The force applied to locking-device 2706 by locking spring 3202 also lifts bottom plate 2909 to engage magnet 2912 with the bottom surface of 308. However, since jaws 2704 remain open until closed by, and around, kingpin 308, trailer angle encoder 2602 is not deployed until kingpin 308 is within jaws 2704. Advantageously, the existing mechanism for controlling locking-device 2706 also operates to deploy trailer angle encoder 2602 from kingpin 308.

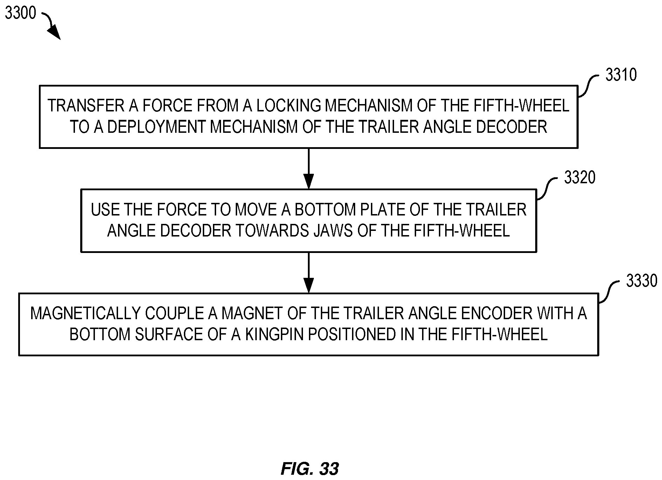

FIG. 33 is a flowchart illustrating one example method for deploying trailer angle encoder 2602 of FIGs. 26, and 28-32 during operation of FW 222 of FIG. 2, in embodiments.

At block 3310, method 3300 transfers a force from a locking mechanism of the fifth-wheel to a deployment mechanism of the trailer angle encoder. In one example of block 3310, actuation arms 2916 receive a force from locking spring 3202 via locking-device 2706.

At block 3320, method 3300 uses the force to move a bottom plate of the trailer angle encoder towards jaws of the fifth-wheel. In one example of block 3320, actuation arms 2916, pivots 2918, and vertical shafts 2914 translate the force from locking spring 3202, received via shorter end 2920 of actuation arms 2916, into a movement of bottom plate 2909 towards jaws 2704, and kingpin 308 when captured therein.

At block 3330, method 3300 magnetically couples a magnet of the trailer angle encoder with a bottom surface of a kingpin positioned in the fifth-wheel. In one example of block 3330, magnet 2912 magnetically couples with the bottom surface of 308 captured by jaws 2704.

Changes may be made in the above methods and systems without departing from the scope hereof. It should thus be noted that the matter contained in the above description or shown in the accompanying drawings should be interpreted as illustrative and not in a limiting sense. The following claims are intended to cover all generic and specific features described herein, as well as all statements of the scope of the present method and system, which, as a matter of language, might be said to fall therebetween.

The invention or embodiments might be additionally or alternatively defined or described by way of the following aspects:

1. A trailer angle encoder for determining an angle between a tractor and a trailer coupled thereto, comprising:

   a mounting bracket for coupling with an underside of a fifth-wheel of the tractor;
   a bottom plate, for mounting an optical encoder, that is movable relative to the mounting bracket; and
   a deployment mechanism for moving the bottom plate to engage a magnet, mounted to a rotatable shaft of the optical encoder, with a bottom surface of a kingpin.

2. The trailer angle encoder of aspect 1, the deployment mechanism comprising an actuator arm attached by a pivot to the mounting bracket, and a vertical rod mechanically coupling between the bottom plate and the actuator arm, wherein the actuator arm is positioned for actuation by a locking mechanism of the fifth-wheel.

3. The trailer angle encoder of aspect 2, wherein a force supplied to the locking mechanism by a spring is used to deploy the trailer angle encoder.

4. The trailer angle encoder of aspect 2, the deployment mechanism moving the bottom plate towards the jaws when the actuator arm is actuated by the locking mechanism.

5. The trailer angle encoder of aspect 2, the deployment mechanism comprising two actuator arms and two vertical rods.

6. The trailer angle encoder of aspect 5, the locking mechanism comprising a yoke, wherein each of the two actuator arms mechanically coupling with rearward ends of the yoke.

7. The trailer angle encoder of aspect 2, the actuator arm being L-shaped with a lateral portion and an extended portion meeting at the pivot.

8. The trailer angle encoder of aspect 7, wherein the extended portion protrudes above the mounting bracket to mechanically connect with the locking mechanism.

9. The trailer angle encoder of aspect 2, the deployment mechanism further comprising a horizontal shaft that mechanically couples the actuator arm with the vertical rod.

10. The trailer angle encoder of aspect 1, wherein deployment mechanism engages the magnet with the bottom surface of the kingpin when the locking mechanism locks the jaws closed.

11. The trailer angle encoder of aspect 1, wherein the mounting bracket attaches to the fifth-wheel to align the magnet with a position of the kingpin when the trailer is coupled with the tractor.

12. The trailer angle encoder of aspect 1, further comprising a cleaning block positioned to interact with the bottom surface of the kingpin during hitching of the tractor to the trailer.

13. The trailer angle encoder of aspect 12, wherein the interaction of the cleaning block with the kingpin wipes dirt from the bottom surface of the kingpin.

14. The trailer angle encoder of aspect 1, further comprising a two-axis positioning table mounted to provide two-axis movement of the bottom plate such that the magnet moves with the kingpin.

15. The trailer angle encoder of aspect 14, the two-axis positioning table further comprising at least two springs to cause the platform to return to a nominal laterally-center position when the magnet is not magnetically coupled with the kingpin.

16. The trailer angle encoder of aspect 14, the two-axis positioning table maintaining alignment of the magnet with the kingpin.

17. The trailer angle encoder of aspect 1, the platform being able to drop, relative to the fifth-wheel, when the yoke is retracted to unlock jaws of the fifth-wheel such that the kingpin is prevented from contacting a side of the magnet during hitching of the tractor to the trailer.

18. The trailer angle encoder of aspect 1, wherein attachment of the trailer angle encoder to the fifth-wheel does not impede operation of the fifth-wheel.

19. A method for deploying a trailer angle encoder in a fifth-wheel, comprising:

transferring a force from a locking mechanism of the fifth-wheel to a deployment mechanism of the trailer angle encoder;
using the force to move a bottom plate of the trailer angle encoder towards jaws of the fifth-wheel; and
magnetically coupling a magnet of the trailer angle encoder with a bottom surface of a kingpin positioned in the fifth-wheel.

20. The method of aspect 19, wherein the trailer angle decoder is deployed after the jaws close around the kingpin.

**Claims**

1. A trailer angle encoder (2602) for determining an angle between a tractor and a trailer coupled thereto, comprising:

a mounting bracket (2902) for coupling with an underside of a fifth-wheel (222) of the tractor (104);
a bottom plate (2909), for mounting an optical encoder (2910), that is movable relative to the mounting bracket; and
a deployment mechanism (2900) for moving the bottom plate (2909) to engage a magnet (2912), mounted to a rotatable shaft of the optical encoder (2910), with a bottom surface of a kingpin (308), the deployment mechanism (2900) comprising an actuator arm (2916) attached by a pivot (2918) to the mounting bracket (2902), wherein the actuator arm (2916) is positioned for actuation by a locking mechanism (2706) of the fifth-wheel.

2. The trailer angle encoder of claim 1, wherein a force supplied to the locking mechanism (2706) by a spring (3202) is used to deploy the trailer angle encoder.

3. The trailer angle encoder of any preceding claim, the locking mechanism (2706) comprising locking jaws (2704); the deployment mechanism moving the bottom plate towards the jaws (2704) when the actuator arm (2916) is actuated by the locking mechanism (2706).

4. The trailer angle encoder of any preceding claim, the deployment mechanism comprising two actuator arms (2916) and two vertical shafts (2914).

5. The trailer angle encoder of claim 4, the locking mechanism (2706) comprising a yoke, wherein each of the two actuator arms mechanically coupling with rearward ends of the yoke.

6. The trailer angle encoder of any preceding claim, the actuator arm being L-shaped with a lateral portion and an extended portion (2920) meeting at the pivot.

7. The trailer angle encoder of claim 6, wherein the extended portion (2920) protrudes above the mounting bracket to mechanically connect with the locking mechanism (2706).

8. The trailer angle encoder of any preceding claim, the deployment mechanism further comprising a horizontal shaft (3102) that mechanically couples the actuator arm with the vertical shaft (2914).

9. The trailer angle encoder of any preceding claim, the locking mechanism (2706) comprising locking jaws (2704); wherein deployment mechanism engages the magnet (2912) with the bottom surface of the kingpin (308) when the locking mechanism (2706) locks the jaws (2704) closed.

10. The trailer angle encoder of any preceding claim, wherein the mounting bracket (2902) attaches to the fifth-wheel (222) to align the magnet (2912) with a position of the kingpin (308) when the trailer is coupled with the tractor.

11. The trailer angle encoder of any preceding claim, further comprising a cleaning block (2906) positioned to interact with the bottom surface of the kingpin (308) during hitching of the tractor to the trailer.

12. The trailer angle encoder of any preceding claim, further comprising a two-axis positioning table (2908) mounted to provide two-axis movement of the bottom plate (2909) such that the magnet (2912) moves with the kingpin (308).

13. The trailer angle encoder of any preceding claim, the platform being able to drop, relative to the fifth-wheel (222), when the locking mechanism (2706) is retracted to unlock jaws (2704) of the fifth-wheel (222) such that the kingpin (308) is prevented from contacting a side of the magnet (2912) during hitching of the tractor to the trailer.

14. A method for deploying a trailer angle encoder (2602) in a fifth-wheel, comprising:

transferring a force from a locking mechanism (2706) of the fifth-wheel (222) to an actuator arm (2916) of a deployment mechanism (2900) of the trailer angle encoder (2602); using the force to move a bottom plate (2909) of the trailer angle encoder towards jaws (2704) of the fifth-wheel (222); and magnetically coupling a magnet (2912) of the trailer angle encoder with a bottom surface of a kingpin (308) positioned in the fifth-wheel (222).

15. The method of claim 14, wherein the trailer angle encoder (2602) is deployed after the jaws (2704) close around the kingpin (308).

100

CHECK POINT
109

106
104

106

140

108

108

106

STAGING AREA 130

WAREHOUSE 110

MISSION
CONTROLLER
102

104
106

LOADING AREA 150

FIG. 1

100

MISSION
CONTROLLER 102

TRACTOR 104

| LOCATION UNIT 216 | CAMERA 218 | BATTERY 202 |

| DRIVE MOTOR 212 | FIFTH WHEEL 222 | LIDAR 220 |

DRIVE CIRCUIT 214
SAFETY FEATURE 215

| FW ACTUATOR 224 | TRAILER ANGLE ENCODER 204 |

| STEERING ACTUATOR 225 | TRAILER AIR ACTUATOR 238 | BRAKE ACTUATOR 239 |

CONTROLLER 206

PROCESSOR 208

MEMORY 210

FUNCTION STATE MACHINE 226

POINT CLOUD 221

MANEUVERING MODULE 240

ANGULAR CHANGE 205

TRAILER ANGLE MODULE 232

CURRENT TRAILER ANGLE 233

STEERING ANGLE 250

NAVIGATION MODULE 234

*FIG. 2*

FIG. 3

EP 4 631 749 A1

**FIG. 4**

*FIG. 5*

EP 4 631 749 A1

*FIG. 6*

**FIG. 7**

EP 4 631 749 A1

**FIG. 8**

**FIG. 9**

FIG. 10

EP 4 631 749 A1

**FIG. 14**

**FIG. 15**

**FIG. 13**

**FIG. 16**

**FIG. 17**

**FIG. 18**

**FIG. 19**

**FIG. 20**

**FIG. 21**

*FIG. 22*

*FIG. 23*

*FIG. 24*

*FIG. 25*

222

2602

FIG. 26

222

2708

2710

KINGPIN POSITIN 2702

2706

2704 JAWS

**FIG. 27**

**FIG. 28**

EP 4 631 749 A1

FIG. 29

**FIG. 30**

EP 4 631 749 A1

FIG. 31

FIG. 32

3300

TRANSFER A FORCE FROM A LOCKING MECHANISM OF THE FIFTH-WHEEL TO A DEPLOYMENT MECHANISM OF THE TRAILER ANGLE DECODER — 3310

USE THE FORCE TO MOVE A BOTTOM PLATE OF THE TRAILER ANGLE DECODER TOWARDS JAWS OF THE FIFTH-WHEEL — 3320

MAGNETICALLY COUPLE A MAGNET OF THE TRAILER ANGLE ENCODER WITH A BOTTOM SURFACE OF A KINGPIN POSITIONED IN THE FIFTH-WHEEL — 3330

*FIG. 33*

**EUROPEAN SEARCH REPORT**

Application Number

EP 25 16 8657

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 302 547 B1 (VALENTINO JOSEPH A [US]) 16 October 2001 (2001-10-16) | 1-4,6, 9-11, 13-15 | INV. B60D1/01 B60D1/62 |
| Y | * column 2, line 13 - line 24 * | 12 | B62D15/02 |
| A | * column 4, line 36 - line 49; figures 2,6,8 * | 5,7,8 | B62D53/08 |
| A | DE 10 2018 123644 A1 (WESTFALIA AUTOMOTIVE GMBH [DE]) 26 March 2020 (2020-03-26) * paragraph [0174]; figure 8 * | 1 | |
| Y | AU 2023 202 711 A1 (JOST WERKE DEUTSCHLAND GMBH [DE]) 23 November 2023 (2023-11-23) * page 11, line 15 - line 33; figure 3 * | 12 | |
| A | CN 112 041 179 A (WABCO GMBH) 4 December 2020 (2020-12-04) * claims; figures * | 1 | |
| A | US 9 844 988 B2 (VAN DE WETERING MARTINUS THEODORUS [NL]) 19 December 2017 (2017-12-19) * claims; figures * | 1 | TECHNICAL FIELDS SEARCHED (IPC) B60D B62D |
| A | AU 2022 297 527 A1 (OUTRIDER TECHNOLOGIES INC) 8 February 2024 (2024-02-08) * claims; figures * | 1 | |

The present search report has been drawn up for all claims

| Place of search | Date of completion of the search | Examiner |
|---|---|---|
| The Hague | 21 July 2025 | Schmidt, Rémi |

EPO FORM 1503 03.82 (P04C01)

## ANNEX TO THE EUROPEAN SEARCH REPORT
## ON EUROPEAN PATENT APPLICATION NO.

EP 25 16 8657

21-07-2025

| Patent document cited in search report | | Publication date | Patent family member(s) | | Publication date |
|---|---|---|---|---|---|
| US 6302547 | B1 | 16-10-2001 | DE | 60012528 T2 | 28-07-2005 |
| | | | EP | 1192483 A1 | 03-04-2002 |
| | | | US | 6302547 B1 | 16-10-2001 |
| | | | WO | 0068713 A1 | 16-11-2000 |
| DE 102018123644 | A1 | 26-03-2020 | CN | 112839828 A | 25-05-2021 |
| | | | DE | 102018123644 A1 | 26-03-2020 |
| | | | EP | 3856543 A1 | 04-08-2021 |
| | | | EP | 4458591 A2 | 06-11-2024 |
| | | | US | 2021347420 A1 | 11-11-2021 |
| | | | WO | 2020064392 A1 | 02-04-2020 |
| AU 2023202711 | A1 | 23-11-2023 | AU | 2023202711 A1 | 23-11-2023 |
| | | | BR | 102023008370 A2 | 14-11-2023 |
| | | | CN | 117002637 A | 07-11-2023 |
| | | | DE | 102022111393 A1 | 09-11-2023 |
| | | | EP | 4272980 A1 | 08-11-2023 |
| | | | JP | 2023165663 A | 16-11-2023 |
| | | | KR | 20230156653 A | 14-11-2023 |
| | | | US | 2023356552 A1 | 09-11-2023 |
| CN 112041179 | A | 04-12-2020 | CN | 112041179 A | 04-12-2020 |
| | | | DE | 102018114851 A1 | 24-12-2019 |
| | | | EP | 3810443 A1 | 28-04-2021 |
| | | | US | 2021171100 A1 | 10-06-2021 |
| | | | WO | 2019243025 A1 | 26-12-2019 |
| US 9844988 | B2 | 19-12-2017 | BR | 112014028412 A2 | 01-10-2019 |
| | | | EP | 2849991 A1 | 25-03-2015 |
| | | | ES | 2620430 T3 | 28-06-2017 |
| | | | NL | 2009960 C2 | 06-11-2013 |
| | | | US | 2015084311 A1 | 26-03-2015 |
| | | | WO | 2013180562 A1 | 05-12-2013 |
| AU 2022297527 | A1 | 08-02-2024 | AU | 2022297527 A1 | 08-02-2024 |
| | | | BR | 112023027269 A2 | 12-03-2024 |
| | | | CA | 3223658 A1 | 29-12-2022 |
| | | | CN | 117836194 A | 05-04-2024 |
| | | | EP | 4359283 A1 | 01-05-2024 |
| | | | US | 2022413157 A1 | 29-12-2022 |
| | | | US | 2024210168 A1 | 27-06-2024 |
| | | | US | 2024219575 A1 | 04-07-2024 |
| | | | WO | 2022271978 A1 | 29-12-2022 |

EPO FORM P0459

For more details about this annex : see Official Journal of the European Patent Office, No. 12/82